# EUROPEAN PATENT APPLICATION

(11) **EP 4 675 386 A1**
(43) Date of publication of application: **07.01.2026**
(21) Application number: 25183254.9
(22) Date of filing: 17.06.2025
(51) Int. Cl.: G05D 1/224, G05D 1/648, A01B 69/00, G01C 21/00, G05D 105/15, G05D 107/20, G05D 109/10

(54) **ASSIST SYSTEM FOR WORKING MACHINE AND METHOD OF ASSISTING WORKING MACHINE**

(30) Priority: 03.07.2024 JP 2024107712
(71) Applicant: KUBOTA CORPORATION, Osaka-shi, Osaka 556-8601 (JP)
(72) Inventor: SHINOZAKI, Mitsuru, SAKAI-SHI, OSAKA, 5900908 (JP); KITAJIMA, Toshihiro, SAKAI-SHI, OSAKA, 5900908 (JP)
(74) Representative: Cabinet Beau de Loménie

(57) **Abstract**

An assist system (S) for a working machine (1) includes one or more sensors (25) provided in or on the working machine (1) to sense a surrounding area of the working machine (1), a position estimator (20a) configured or programmed to estimate a position of the working machine (1) based on a sensing result from the one or more sensors (25) and based on environmental map information. The environmental map information includes one or more pieces of map information relating to one or more worksites. The position estimator (20a) is configured or programmed to modify, based on a work status in each of the one or more worksites, an area in the environmental map information to be referenced by the position estimator (20a) and estimate the position by referencing the modified area. The assist system (S) may further include a selector (41b) configured or programmed to select at least one worksite in which the work status satisfies a predetermined condition from the one or more worksites of the environmental map information. The position estimator (20a) may be configured or programmed to exclude the corresponding at least one piece of map information relating to the at least one worksite selected by the selector (41b) from the environmental map information to modify the area in the environmental map information to be referenced by the position estimator (20a).

## Description

### BACKGROUND OF THE INVENTION

### Field of the Invention

The present invention relates to assist systems for working machines and methods of assisting working machines.

### Description of the Related Art

An autonomous traveling system disclosed in Japanese Unexamined Patent Application Publication No. 2022-146457 includes a traveling machine body equipped with a working device, a distance measurement sensor that measures the distance to at least a portion of surroundings of the machine body, a machine body position estimator that calculates a machine body position by processing a ranging signal from the distance measurement sensor by using a Simultaneous Localization and Mapping (SLAM) algorithm, and an autonomous traveling controller that causes the traveling machine body to autonomously travel based on the machine body position.

### SUMMARY OF THE INVENTION

In the autonomous traveling system disclosed in Japanese Unexamined Patent Application Publication No. 2022-146457, autonomous traveling is achieved based on a machine body position calculated by processing a ranging signal by a SLAM algorithm. A map may be updated by sequentially rewriting reference point cloud data while regarding input point cloud data at a machine body position as reference point cloud data every time the machine body position is calculated (estimated) by scan matching to perform more accurate position estimation. However, in the case where an environment such as a shape of a worksite such as an agricultural field changes before update of the map, the actual worksite and environmental map information are deviated. This leads to a risk of decrease in accuracy of position estimation.

The present invention was made to solve such a problem of the related art, and an object of the present invention is to provide a working machine assist system and method that can appropriately estimate a position in a worksite.

An assist system for a working machine according to an example embodiment of the present invention includes one or more sensors provided in or on the working machine to sense a surrounding area of the working machine, a position estimator configured or programmed to estimate a position of the working machine based on a sensing result from the one or more sensors and based on environmental map information, wherein the environmental map information includes one or more pieces of map information relating to one or more worksites; and the position estimator is configured or programmed to modify, based on a work status in each of the one or more worksites, an area in the environmental map information to be referenced by the position estimator and estimate the position by referencing the modified area.

The assist system may further include a selector configured or programmed to select at least one worksite in which the work status satisfies a predetermined condition from the one or more worksites of the environmental map information. The position estimator may be configured or programmed to exclude the corresponding at least one piece of map information relating to the at least one worksite selected by the selector from the environmental map information to modify the area in the environmental map information to be referenced by the position estimator.

The assist system may further include an updater configured or programmed to update the corresponding at least one piece of map information relating to the at least one worksite selected by the selector based on the sensing result. The position estimator may be configured or programmed to estimate the position based on the environmental map information which includes the corresponding at least one piece of map information updated by the updater.

The updater may be configured or programmed to perform a first process to delete the corresponding at least one piece of map information relating to the at least one worksite selected by the selector, and a second process to reregister, based on the sensing result, information for a portion of the environmental map information from which the corresponding at least one piece of map information has been deleted.

The one or more worksites may be one or more agricultural fields for crops. The selector may be configured or programmed to select at least one agricultural field from the one or more agricultural fields based on the work status which includes a work record and/or a work plan relating to each of the one or more agricultural fields.

The selector may be configured or programmed to, based on the work record and/or the work plan, select at least one agricultural field in which the degree of growth of a planted crop is equal or greater than a predetermined degree or at least one agricultural field which has possibly changed in shape due to work.

The assist system may further include a notifier configured or programmed to provide a warning notification when the selector selects at least one worksite and the position estimator is to estimate the position without referencing information about the selected at least one worksite.

The assist system may further include an assist device to perform a work assistance to assist the working machine in performing work based on the position of the working machine estimated by the position estimator. The assist device may be configured or programmed to, at or in the vicinity of the at least one worksite selected by the selector, prioritize another type of work assistance over the work assistance based on the position of the working machine estimated by the position estimator.

The assist system may further include a position detector to detect the position of the working machine based on one or more satellite signals from one or more positioning satellites. The assist device may be configured to, at or in the vicinity of the at least one worksite selected by the selector, use the position of the working machine detected by the position detector in priority to the position of the working machine estimated by the position estimator to perform the work assistance.

The assist device may include a controller configured or programmed to perform the work assistance including controlling, based on the position of the working machine estimated by the position estimator, at least one of travel of the working machine or work done by the working machine.

The controller may be configured or programmed to include a first mode in which the controller controls at least one of travel of the working machine or work done by the working machine based on the position of the working machine estimated by the position estimator, and a second mode in which the controller controls at least one of travel of the working machine or work done by the working machine based on a user's manual operation. The controller may be configured or programmed to, at or in the vicinity of the at least one worksite selected by the selector, automatically switch the first mode to the second mode to control at least one of travel of the working machine or work done by the working machine.

The assist device may include a display to perform the work assistance including displaying the position of the working machine estimated by the position estimator.

The one or more sensors may include one or more ranging sensors to measure a distance to at least a portion of surroundings of the working machine. The position estimator may be configured or programmed to estimate the position based on one or more ranging signals from the one or more ranging sensors, based on the environmental map information, and based on a simultaneous localization and mapping (SLAM) algorithm.

A method of assisting a working machine according to an example embodiment of the present invention includes a first step including causing one or more sensors in or on the working machine to sense a surrounding area of the working machine, and a second step including causing a position estimator to estimate a position of the working machine based on a sensing result from the one or more sensors in the first step and based on environmental map information, wherein the environmental map information includes one or more pieces of map information relating to one or more worksites, and the second step includes causing the position estimator to modify, based on a work status in each of the one or more worksites, an area in the environmental map information to be referenced by the position estimator and estimate the position by referencing the modified area.

With the assist system for a working machine and the method of assisting a working machine, it is possible to appropriately estimate a position in a worksite.

The above and other elements, features, steps, characteristics and advantages of the present invention will become more apparent from the following detailed description of the example embodiments with reference to the attached drawings.

### BRIEF DESCRIPTION OF THE DRAWINGS

A more complete appreciation of example embodiments of the present invention and many of the attendant advantages thereof will be readily obtained as the same becomes better understood by reference to the following detailed description when considered in connection with the accompanying drawings described below.
FIG. 1 is an overall view of an assist system for a working machine.
FIG. 2 is a schematic side view illustrating the working machine.
FIG. 3 is a schematic plan view illustrating the working machine.
FIG. 4 illustrates an example of a sensing range of a sensor provided in or on the working machine.
FIG. 5 illustrates an example of environmental map information.
FIG. 6 illustrates a scheduled traveling route.
FIG. 7 illustrates an example of a map screen.
FIG. 8 illustrates an example of a work record stored in a database.
FIG. 9 illustrates a first process performed by an updater.
FIG. 10A illustrates an example of a case where the updater does not delete environmental map information in the first process.
FIG. 10B illustrates an example of a case where the updater deletes environmental map information in the first process.
FIG. 11 illustrates a second process performed by the updater.
FIG. 12 illustrates an example of an expanded area.
FIG. 13 illustrates an example of a work plan stored in the database.
FIG. 14 is a flowchart illustrating an example of position estimation performed by a position estimator and the updating process performed by the updater.

### DESCRIPTION OF THE EXAMPLE EMBODIMENTS

Example embodiments will now be described with reference to the accompanying drawings, wherein like reference numerals designate corresponding or identical elements throughout the various drawings. The drawings are to be viewed in an orientation in which the reference numerals are viewed correctly.

Example embodiments of the present invention are described below with reference to the drawings.

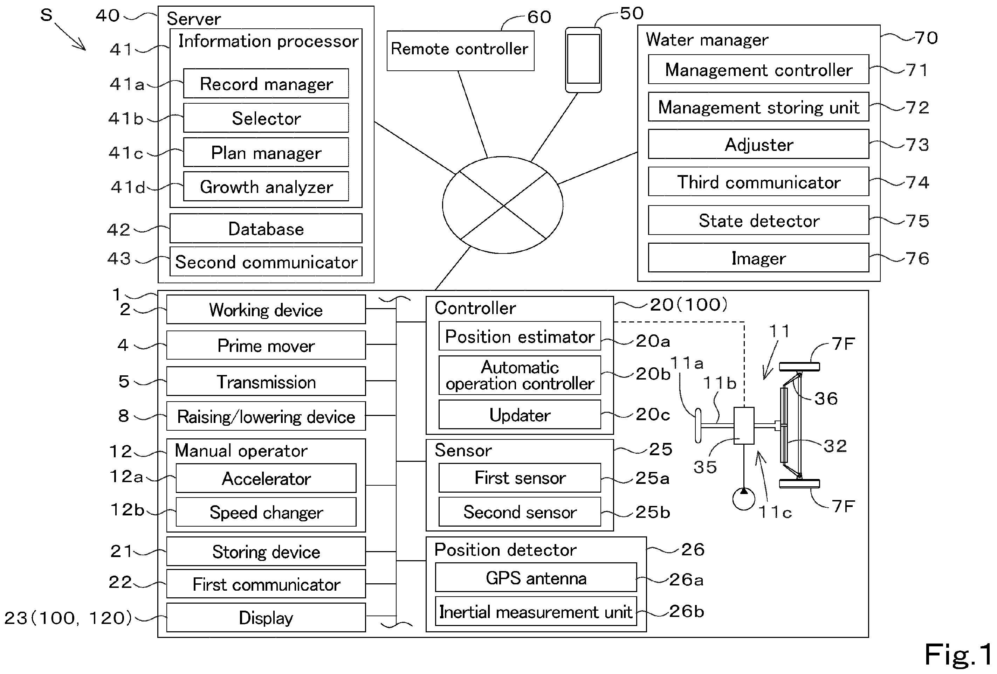

FIG. 1 is an overall view of an assist system S for a working machine 1 according to the present embodiment. The assist system S for the working machine 1 estimates a position of the working machine 1 based on a sensing result from one or more sensors 25 provided in or on the working machine 1 and environmental map information M. Furthermore, the assist system S for the working machine 1 assists work (at least one of travel or work) of the working machine 1 based on a position EP (estimated position) of the working machine 1 thus estimated. In the present embodiment, a case where the assist system S for the working machine 1 includes the working machine 1 and an external server 40 is described as an example. First, the working machine 1 is described.

The working machine 1 is a vehicle that can perform work while traveling. In the present embodiment, the working machine 1 is a tractor including a traveling vehicle body 3 (machine body) to which a working device 2 (implement) is attachable. Note, however, that the working vehicle 1 can be any vehicle that can perform work while traveling and is not limited to a tractor. For example, the working machine 1 may be an agricultural machine such as a combine or a rice planter or a construction machine such as a compact track loader or a backhoe.

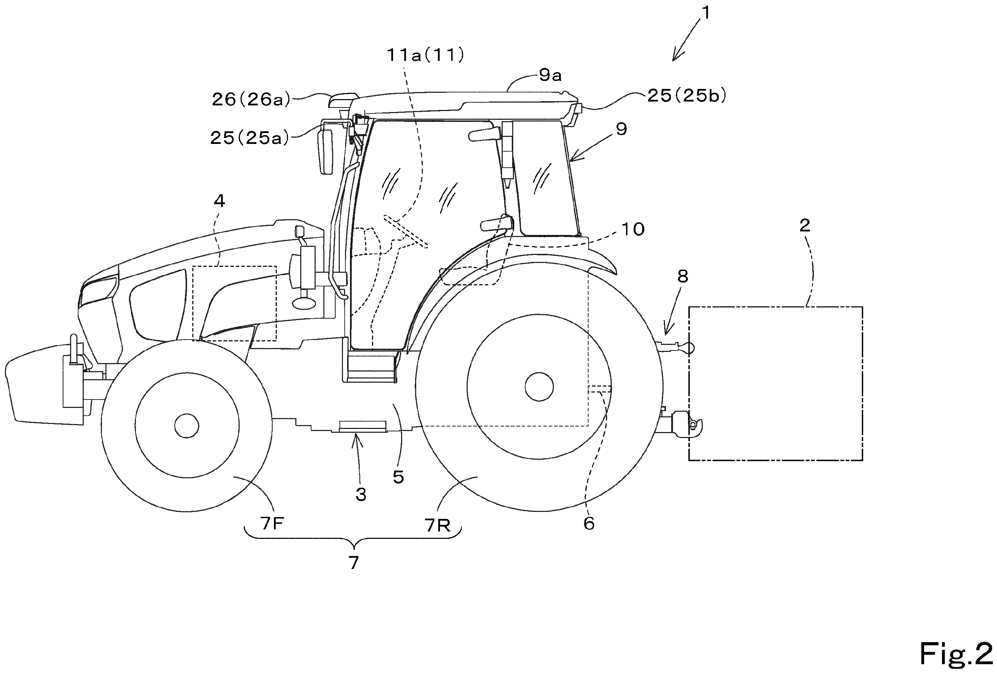

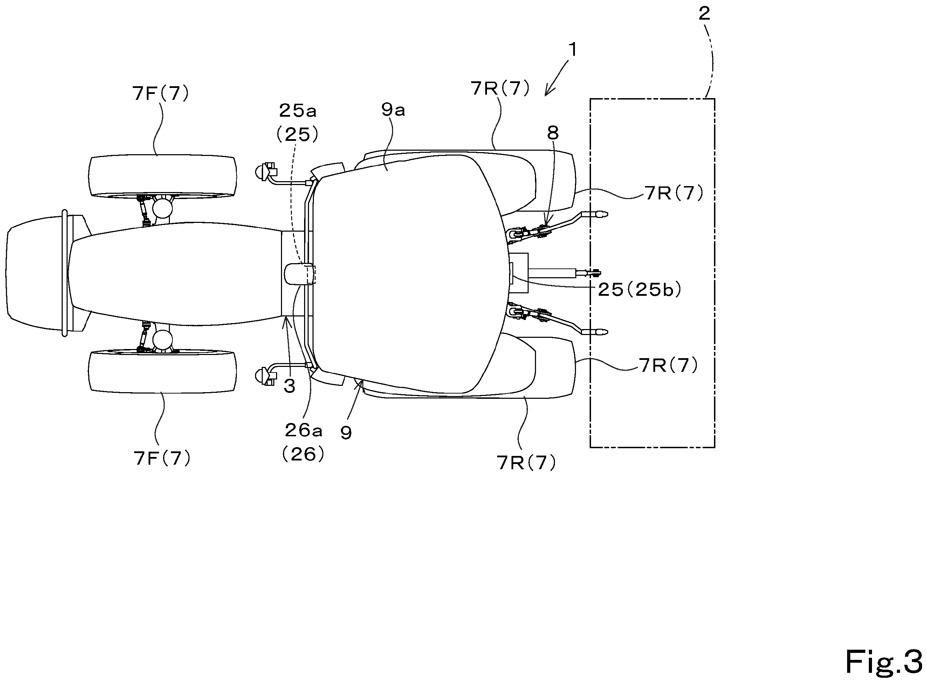

FIG. 2 is a schematic side view illustrating the working machine 1. FIG. 3 is a schematic plan view illustrating the working machine 1. In the description of the present embodiment, a direction (a leftward direction in FIGS. 2 and 3) which a user sitting on an operator's seat 10 of the working machine 1 faces is referred to as a forward direction, and an opposite direction (a rightward direction in FIGS. 2 and 3) is referred to as a rearward direction. Furthermore, a left side viewed from a user's point of view (the near side in FIG. 2, the lower side in FIG. 3) is referred to as a leftward direction, and a right side viewed from the user's point of view (the far side in FIG. 2, the upper side in FIG. 3) is referred to as a rightward direction. A horizontal direction orthogonal to a front-rear direction is referred to as a width direction.

As illustrated in FIGS. 2 and 3, the working machine 1 includes the traveling vehicle body 3 including a traveling device 7, a prime mover 4, and a transmission 5. The traveling device 7 gives propelling force to the traveling vehicle body 3 by being driven. The traveling device 7 is a wheeled traveling device 7 whose front wheel 7F and rear wheel 7R are tires. A pair of front wheels 7F are provided apart from each other in the width direction, and a pair of rear wheels 7R are provided apart from each other in the width direction. As another example, the traveling device 7 whose front wheel 7F and/or rear wheel 7R are crawlers may be used. The traveling vehicle body 3 can travel forward and backward by drive of the traveling device 7.

The prime mover 4 is provided in a front portion of the traveling vehicle body 3. The prime mover 4 is, for example, a diesel engine. As another example, the prime mover 4 may be another internal-combustion engine such as a gasoline engine, an electric motor, or the like.

The transmission 5 can speed-change power output by the prime mover 4 by switching a transmission stage to switch propelling force of the traveling device 7 and can change a switching state of the traveling device 7 (switching to forward traveling or rearward traveling of the traveling device 7). The transmission 5 transmits power of the prime mover 4 to the PTO shaft 6. The PTO shaft 6 is an output shaft that is connected to the working device 2 and thus drives the working device 2.

A protection mechanism 9 for protecting the operator's seat 10 is provided on an upper portion of the traveling vehicle body 3. The protection mechanism 9 is, for example, a cabin that surrounds the operator's seat 10, and the operator's seat 10 is provided in the cabin 9. Note that the protection mechanism 9 is not limited to the cabin 9 and may be a canopy or a ROPS standing behind the operator's seat 10.

The working device 2 is attached to the traveling vehicle body 3. In the tractor of the present embodiment, the working device 2 is detachably attached to the traveling vehicle body 3. Specifically, a coupler 8 to and from which the working device 2 is attachable and detachable is provided on a front portion and/or a rear portion of the traveling vehicle body 3. In the example illustrated in FIGS. 2 and 3, the coupler 8 is provided on the rear portion of the traveling vehicle body 3. Accordingly, the working machine 1 can tow the working device 2 coupled to the coupler 8 by drive of the traveling device 7.

In FIGS. 2 and 3, a raising/lowering device using a three-point linkage is illustrated as the coupler 8. The raising/lowering device 8 is a raising/lowering device 8 that changes relative positions of the traveling vehicle body 3 and the working device 2 by raising or lowering the working device 2 with respect to the traveling vehicle body 3. Note that the coupler 8 is not limited to the raising/lowering device 8 using a three-point linkage, and it is only necessary that the coupler 8 can couple the working device 2 to the traveling vehicle body 3. For example, the coupler 8 may be a swinging drawbar or the like that couples the working device 2 and the traveling vehicle body 3 and does not change relative positions of the working device 2 and the traveling vehicle body 3.

The working device 2 is a device that performs work on a worksite H (e.g., an agricultural field Ha in which crops are planted) or a work target in the worksite H (e.g., crops planted in the agricultural field Ha). The working device 2 is a cultivator that performs cultivation work, a ridge maker that makes a ridge, a seeder that sows seeds (performs sowing work), a groove cutter that performs groove cutting, a harvester that harvests crops, a mower that mows hay or the like, a tedder that spreads hay or the like, a rake that rakes up hay or the like, a baler that molds hay or the like, a fertilizer spreader that spreads a fertilizer, an agricultural chemical spreader that spreads an agricultural chemical, a separator that separates crops, or the like.

Note that although a case where the working machine 1 is a tractor and the working device 2 is coupled to the coupler 8 has been described, the working device 2 is not limited to an implement coupled to the traveling vehicle body 3 by the coupler 8. For example, the working device 2 may be a front loader attached to a front portion of the traveling vehicle body 3.

The working device 2 may be any device that is provided on the working machine 1 and performs work on the worksite H, and need not be a device that is attachable to and detachable from the traveling vehicle body 3 like an implement. For example, in the case where the working machine 1 is a combine, the working device 2 includes a mower that performs crop mowing or the like. In a case where the working machine 1 is a rice planter, the working device 2 includes a seedling planter that plants seedlings. In a case where the working machine 1 is a backhoe or a compact track loader, the working device 2 can be, for example, an attachment.

As illustrated in FIG. 1, the working machine 1 includes a steering 11. The steering 11 is a manual operator to be operated to change the steering angle (steering direction) of the traveling vehicle body 3. The steering 11 includes a steering wheel 11a, a rotary shaft 11b (steering shaft) that rotates as the steering wheel 11a is rotated, and an assist mechanism 11c (power steering mechanism) that assists steering of the steering wheel 11a.

The assist mechanism 11c includes a control valve 35 and a steering cylinder 32. The control valve 35 is, for example, a three-position switching valve that is switchable by movement of a spool or the like. The control valve 35 is also switchable by steering of the steering shaft 11b. The steering cylinder 32 is connected to an arm 36 (knuckle arm) that changes a direction of the front wheel 7F. Accordingly, a switching position and an opening of the control valve 35 are switched in accordance with an operation of rotating the steering wheel 11a, and the steering cylinder 32 extends and retracts leftward or rightward in accordance with the switching position and opening of the control valve 35. The steering direction of the front wheel 7F is thus changeable.

Note that the steering 11 described above is an example and is not limited to the above configuration. For example, in the case where the traveling device 7 can change the steering angle by using different propelling forces at one of opposite sides in the width direction and at the other of the opposite sides in the width direction, the traveling device 7 may also function as the steering 11.

As illustrated in FIG. 1, the working machine 1 includes a controller 20. The controller 20 includes one or more processors. The controller 20 of the working machine 1 is configured or programmed to perform various kinds of control concerning the working machine 1. The controller 20 is communicably connected to equipment and devices mounted on the working machine 1 over an in-vehicle network such as CAN, ISOBUS, LIN, or FlexRay.

The controller 20 includes one or more memories, various analog circuits, various digital circuits, and/or the like. The one or more memories store therein a software program to be executed by the one or more processors and various data. The controller 20 can read out a software program from the one or more memories and perform various processes based on the software program by the one or more processors. Note that the controller 20 may be capable of executing various processes based on a predetermined logic circuit by the one or more processors.

The processors are, for example, a central processing unit (CPU), a graphics processing unit (GPU), a digital signal processor (DSP), a field programmable gate array (FPGA), an application specific integrated circuit (ASIC), and the like.

Note that the controller 20 may perform various processes through collaboration of a plurality of processors that are located physically apart from each other, and the configuration of the controller 20 is not limited to the above configuration. In this case, the plurality of processors are mounted on one or more computers physically apart from the working machine 1, and these processors are communicably connected over a network such as an in-vehicle network, a LAN, a WAN, or the Internet.

The software program may be stored in a storing device (memory and/or storage) 21 (a nonvolatile memory such as an HDD or an SSD) communicably connected to the controller 20 or the external server 40 connected over the network and may be installed from the storing device 21 or the external server 40 into the memory.

A manual operator 12 to operate the working machine 1 is connected to the controller 20. The manual operator 12 includes an accelerator 12a (an accelerator pedal, an accelerator lever), a speed changer 12b (a gear shifting lever, a gear shifting switch), and the like. In the following description, the manual operator 12 is described by taking the accelerator 12a and the speed changer 12b as an example, and description of other operation members is omitted.

The accelerator 12a is a member by which a user manually operates a traveling speed, that is, a vehicle speed of the working machine 1 (the traveling vehicle body 3). The controller 20 controls the traveling speed of the traveling vehicle body 3 based on an operation signal input from the accelerator 12a. Specifically, the controller 20 controls the traveling speed of the traveling vehicle body 3 based on an operation amount of the accelerator 12a and a control map stored in advance in the storing device 21. The speed changer 12b is a member by which the user manually operates a speed stage of the transmission 5. The controller 20 changes the speed stage of the transmission 5 based on an operation signal input from the speed changer 12b.

As illustrated in FIG. 1, the working machine 1 includes a first communicator 22. The first communicator 22 is a communication interface of the working machine 1 and includes a communication circuit. For example, the first communicator 22 wirelessly communicates with the external server 40, a mobile terminal, or the like by using IEEE802.11 series Wi-Fi (Wireless Fidelity, Registered Trademark), which is a communication standard, a mobile communication network, a data communication network, or the like. The first communicator 22 wirelessly communicates with the server 40 or the like to perform input and output (transmission and reception) of various kinds of information, data, signals, and the like. That is, the first communicator 22 functions as both of an input interface that receives input of information by receiving the information from an outside and an output interface that outputs information by transmitting the information to an outside.

As illustrated in FIG. 1, the working machine 1 includes a display 23. The display 23 includes, for example, a display unit such as a liquid crystal display. The display 23 is provided close to the operator's seat 10 and displays various kinds of information concerning the working machine 1. The display 23 includes an operation actuator that receives an operation, and the operation actuator is hardware such as a physical switch or software such as a displayed image that is displayed on the display unit and can be operated. In the present embodiment, a touch panel is provided on the display unit of the display 23, and the operation actuator receives an operation when the user operates the touch panel. Accordingly, the display 23 according to the present embodiment functions as both of an input interface that receives input of information upon receipt of an operation by the operation actuator and an output interface that outputs information by displaying a screen on the display unit.

As illustrated in FIG. 1, the working machine 1 includes one or more sensors 25. The sensor 25 senses a surrounding area of the working machine 1. Specifically, the sensor 25 performs the sensing by measuring a distance to a surrounding environment (surrounding object) of the working machine 1. The sensor 25 is a ranging sensor that measures a distance to at least a portion of surroundings of the working machine 1. The sensor 25 can detect point cloud data of the surrounding environment of the working machine 1 by measuring a distance to at least a portion of surroundings of the working machine 1.

The sensor 25 is communicably connected to the controller 20 by wire or wirelessly and outputs a sensing result to the controller 20. The sensor 25 includes an optical ranging sensor, a signal processing circuit, and the like. The optical ranging sensor of the sensor 25 is, for example, a light detection and ranging (LiDAR) sensor.

The LiDAR sensor (laser sensor) emits millions of measurement light (laser light) pulses per second from a light source such as a laser diode, the measurement light is reflected by a rotating mirror to be scanned horizontally or vertically and are thus projected onto a predetermined detection range (a sensing range, for example, 360°). Then, the LiDAR sensor causes a light receiving element to receive the measurement light reflected by a target. The signal processing circuit detects a distance to the target based on a period from the emission of the measurement light by the LiDAR sensor to the reception of the reflected light (Time of Flight (ToF) method).

Examples of the optical ranging sensor of the sensor 25 include imagers such as a charge coupled device (CCD) camera including a CCD image sensor or a complementary metal oxide semiconductor (CMOS) camera including a CMOS image sensor and a ToF camera in addition to the LiDAR sensor. Although a case where the sensor 25 includes an optical ranging sensor has been illustrated in the above example, an acoustic wave ranging sensor (e.g., an aerial ultrasonic sensor such as a sonar) may be used instead of the optical ranging sensor.

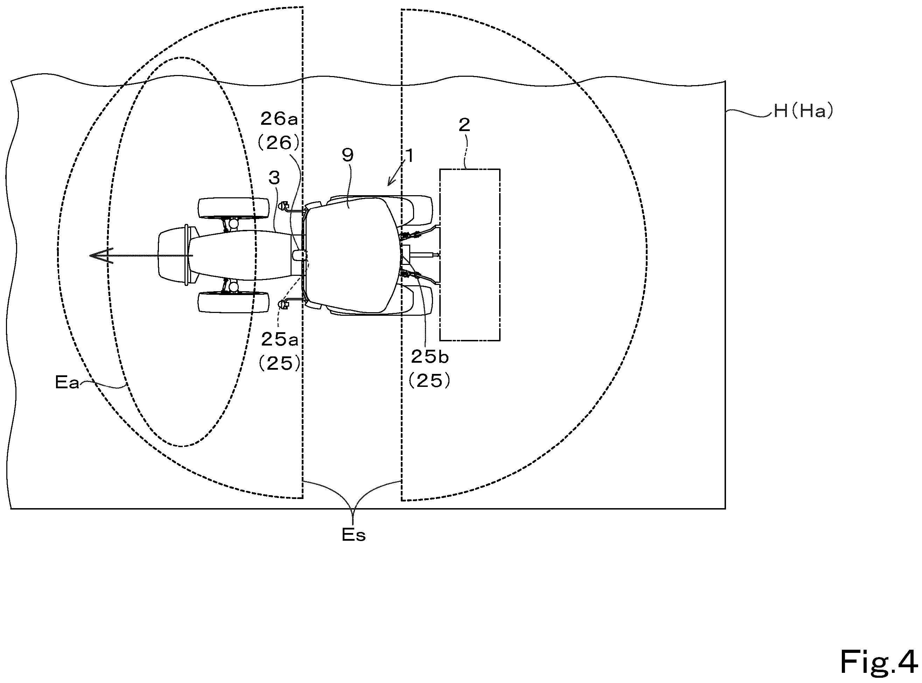

FIG. 4 illustrates an example of a sensing range Es of the sensor 25 provided in or on the working machine 1. The one or more sensors 25 are provided in or on the working machine 1, and a surrounding area of the working machine 1 can be sensed by the one or more sensors 25. As illustrated in FIG. 4, the one or more sensors 25 can sense the range Es (sensing range) including at least an area Ea (position estimation range) necessary for estimating the position of the working machine 1. The position estimation range Ea is, for example, a range present ahead of the working machine 1 in a direction of travel.

FIG. 4 is merely a diagram for explaining the sensing range Es, and the ranges Es and Ea are not limited to the example illustrated in FIG. 4. The distance that can be sensed by the sensor 25 varies depending on the ranging sensor used as the sensor 25.

In the present embodiment, the working machine 1 travels forward or rearward. Accordingly, the sensor 25 can sense, as the surrounding area of the working machine 1, a range including at least a range ahead of the working machine 1 and a range behind the working machine 1. In the example illustrated in FIGS. 2 and 3, two sensors 25 are provided in or on the working machine 1, and one sensor 25a (first sensor) senses a range ahead of the working machine 1, and the other sensor 25b (second sensor) senses a range behind the working machine 1. For example, the first sensor 25a is provided on a front portion of a roof 9a of the cabin 9. The second sensor 25b is provided on a rear portion of the roof 9a.

The first sensor 25a masks an area where the devices and equipment provided on the working machine 1 such as the cabin 9 including the roof 9a are detected. Accordingly, the first sensor 25a senses a range (e.g., 180°) substantially forward of the working machine 1 and detects point cloud data in this sensing range Es.

The second sensor 25b masks the area where the devices and equipment provided on the working machine 1 such as the cabin 9 including the roof 9a are detected. In this case, the second sensor 25b may acquire the position of the working device 2 coupled to the raising/lowering device 8 and mask an area where the working device 2 is detected. Accordingly, the second sensor 25b senses a range (e.g., 180°) substantially rearward of the working machine 1 and detects point cloud data in this sensing range Es.

With the above configuration, in the present embodiment, substantially 360° around the working machine 1 can be sensed by the first sensor 25a and the second sensor 25b. Note that it is only necessary that one or more sensors 25 be provided in or on the working machine 1 and a surrounding area of the working machine 1 can be sensed by the one or more sensors 25, and the sensing range Es is not limited to substantially 360° around the working machine 1. Furthermore, the attachment position of the sensor 25 is not limited to the above position. For example, the sensor 25 may be attached to a different position such as a front portion or an upper portion of a hood that covers the prime mover 4. As illustrated in FIG. 4, the sensing range Es may include a blind area, but preferably covers substantially 360° around the working machine 1.

In a case where a ROPS is provided as the protection mechanism 9, a single sensor 25 may be provided on an upper portion of the ROPS. The front portion and the rear portion of the traveling vehicle body 3 may be each provided with an attachment structure extending outward in the width direction of the traveling vehicle body 3, and a pair of sensors 25 may be provided on each of the front portion and the rear portion of the traveling vehicle body 3 so as to be apart from the traveling vehicle body 3 outward in the width direction. The one or more sensors 25 may be provided on the working device 2 attachable to and detachable from the traveling vehicle body 3.

As illustrated in FIG. 1, the assist system S for the working machine 1 includes a position estimator 20a that estimates the position of the working machine 1 based on the sensing result from the sensor 25. The position estimator 20a is, for example, a software program installed in the controller 20. As another example, in the case where the working machine 1 is communicably connected directly or indirectly to an information processor 41 of the external server 40 or the like via the first communicator 22, the position estimator 20a may be provided in the external server 40 or the like provided outside the working machine 1. In the following description, a case where the position estimator 20a is provided in the controller 20 (the working machine 1) is taken as an example, and detailed description of other examples is omitted.

The position estimator 20a estimates the position of the working machine 1 based on the sensing result from the sensor(s) 25 and based on the environmental map information M. The position estimator 20a estimates the position based on the sensing result from the sensor(s) 25 (ranging signal(s) from ranging sensor(s)), based on the environmental map information M, and based on a simultaneous localization and mapping (SLAM) algorithm.

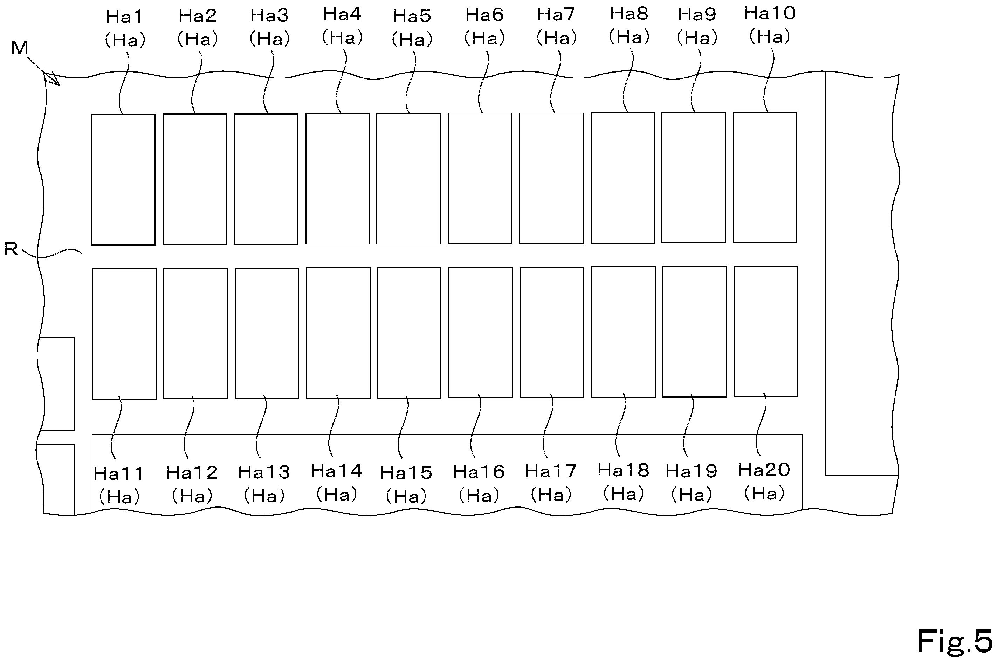

The environmental map information M includes one or more pieces of map information relating to one or more worksites H. FIG. 5 illustrates an example of the environmental map information M. In the example illustrated in FIG. 5, the environmental map information M includes first to twentieth agricultural fields Ha1 to Ha20 as the worksites H (agricultural fields Ha). Furthermore, the environmental map information M includes map information relating to an environment around the one or more worksites H in addition to the one or more worksites H. For example, in addition to the one or more pieces of map information relating to the one or more worksites H, the environmental map information M may include map information relating to an area other than the one or more worksites H, such as a road R, an inside of a barn, or an inside of a shed around the one or more worksites H. In a case where the one or more worksites H are one or more agricultural fields Ha, the road R is, for example, an agricultural road around the one or more agricultural fields Ha. The road R can be any road R around the one or more agricultural fields Ha and may be a road R other than an agricultural road.

It is only necessary that the environmental map information M include one or more pieces of map information relating to one or more worksites H, and a range of the environmental map information M is not limited. For example, the environmental map information M illustrated in FIG. 5 may be divided into first environmental map information M including first to fifth agricultural fields Ha1 to Ha5 and eleventh to fifteenth agricultural fields Ha11 to Ha15 and second environmental map information M including sixth to tenth agricultural fields Ha6 to HalO and sixteenth to twentieth agricultural fields Ha16 to Ha20.

The environmental map information M is generated by using point cloud data. This is described by taking, as an example, an area around the one or more agricultural fields Ha in the case where the one or more worksite H are the one or more agricultural fields Ha. In the environmental map information M, the ground around the one or more agricultural fields Ha, crops planted in the one or more agricultural fields Ha, a ridge in the one or more agricultural fields Ha, a border ridge surrounding the one or more agricultural fields Ha, a fence surrounding the one or more agricultural fields Ha, weeds on the ground around the one or more agricultural fields Ha, a barn around the one or more agricultural fields Ha, and the like are indicated as three-dimensional point clouds. The environmental map information M is generated in advance based on the sensing result from the sensor 25 and is stored in the storing device 21. The environmental map information M is stored in the storing device 21 in association with information concerning date and time when the environmental map information M is defined (defined date and time), that is, date and time when the environmental map information M is created or updated.

Note that the environmental map information M stored in the storing device 21 may be one generated based on a sensing result from a sensor of another working machine or the like. The environmental map information M may be stored in a database 42 of the server 40, and the controller 20 may receive the environmental map information M from the server 40 as appropriate in accordance with the worksite H (or the position of the worksite H) where work is performed and a current position of the working machine 1 and cause the environmental map information M to be stored in the storing device 21.

The position estimator 20a estimates the position of the working machine 1 by acquiring point cloud data (detected point cloud data) from the sensing result from the sensor 25 of the working machine 1 and performing position matching (matching) of the acquired detected point cloud data with the point cloud data of the environmental map information M. As the estimation of the position of the working machine 1, the position estimator 20a estimates a predetermined position (reference position) of the working machine 1. In the following description, the position of the working machine 1 estimated by the position estimator 20a is referred to as an "estimated position EP".

For example, the position estimator 20a performs position matching of the detected point cloud data with the point cloud data of the environmental map information M by sequentially translating and rotating one of the point clouds so that the point clouds optimally match by using an Iterative Closest Point (ICP) algorithm, a Normal Distributions Transform (NDT) algorithm, or the like. For example, the position estimator 20a estimates the position of the working machine 1 by performing position matching of the detected point cloud data with the point cloud data of the environmental map information M, sequentially estimating a movement amount, and accumulating the movement amount.

The assist system S for the working machine 1 includes an assist device 100 that assists work (at least one of travel or work) of the working machine 1 based on the position (the estimated position EP) of the working machine 1 estimated by the position estimator 20a. The assist device 100 can be, for example, the controller 20 that controls the traveling device 7 and/or the working device 2 of the working machine 1 based on the estimated position EP.

The controller 20 includes (can be switched between) a first mode (assist mode) in which the controller 20 controls at least one of travel of the working machine 1 or work done by the working machine 1 based on the estimated position EP and a second mode (manual mode) in which the controller 20 controls at least one of travel of the working machine 1 or work done by the working machine 1 based on a user's manual operation. Specifically, as illustrated in FIG. 1, the controller 20 includes an automatic operation controller 20b. The automatic operation controller 20b includes an electric/electronic circuit and a CPU provided in the controller 20, program(s) stored in a memory, and/or the like.

In the first mode, the automatic operation controller 20b controls automatic driving of the working machine 1 (hereinafter referred to as automatic driving control). The automatic operation controller 20b can perform line-type automatic driving control and/or autonomous automatic driving control. The automatic driving is described by taking, as an example, the line-type automatic driving control. The automatic operation controller 20b controls the equipment and devices included in the working machine 1 so that the traveling vehicle body 3 travels along a scheduled traveling route L defined in advance based on the estimated position EP and the scheduled traveling route L. For example, the automatic operation controller 20b controls a steering angle and a traveling speed (vehicle speed) of the traveling vehicle body 3 as the automatic driving control.

The scheduled traveling route L may be stored in advance in the storing device 21 or may be created (defined) based on the estimated position EP estimated by the position estimator 20a during actual traveling of the working machine 1. The scheduled traveling route L may be created based on information input by an input interface (e.g., the display 23). The display 23 may create the scheduled traveling route L or another arithmetic processing device may create the scheduled traveling route L based on information received by the display 23. The input interface may be the first communicator 22, and the first communicator 22 may receive the scheduled traveling route L managed in the external server 40 or the like.

In the automatic driving control, the automatic operation controller 20b controls the steering angle so that a position deviation between the estimated position EP and the scheduled traveling route L becomes less than a threshold. That is, in the case where the position deviation between the estimated position EP and the scheduled traveling route L is less than the threshold, the automatic operation controller 20b maintains the steering angle by controlling the control valve 35 of the steering 11. On the other hand, in the case where the position deviation between the estimated position EP and the scheduled traveling route L is equal to or greater than the threshold, the automatic operation controller 20b changes the steering angle so that the position deviation decreases by controlling the control valve 35 of the steering 11.

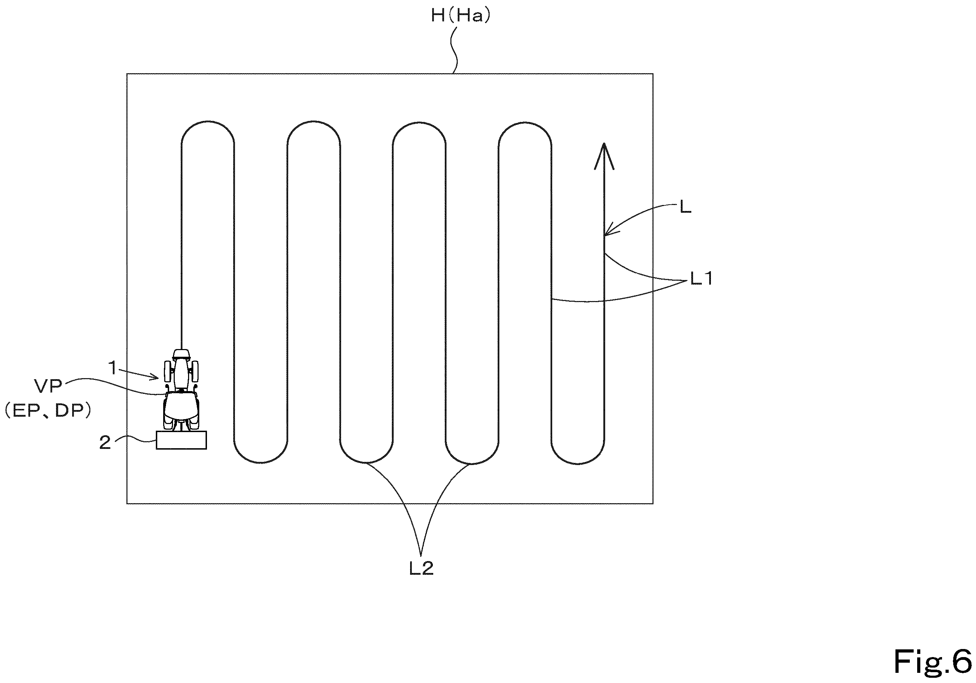

Automatic driving control performed in the case where the working machine 1 performs work in the agricultural field Ha is described. The automatic operation controller 20b performs, for example, automatic driving control so that the working machine 1 travels back and forth between a first edge and a second edge of the worksite H (the agricultural field Ha). FIG. 6 illustrates the scheduled traveling route L. As illustrated in FIG. 6, the scheduled traveling route L in the agricultural field Ha includes a straight traveling portion L1 that extends from one of the first edge and the second edge of the agricultural field Ha to the other and a turning portion L2 that connects one straight traveling portion L1 and another straight traveling portion L1.

The automatic operation controller 20b may control work performed by the working device 2 by controlling the units such as the working device 2 and the raising/lowering device 8 in accordance with the position of the working machine 1 on the scheduled traveling route L and the like. For example, the automatic operation controller 20b can control whether to perform or stop work performed by the working device 2 by controlling drive of the raising/lowering device 8, the PTO shaft 6, and the like.

Note that although automatic driving is described by taking the line-type automatic driving control as an example in the above embodiment, the automatic operation controller 20b controls, in the autonomous automatic driving control, the equipment and devices included in the working machine 1 so that work is performed in the agricultural field Ha based on the estimated position and sensing result irrespective of the scheduled traveling route L.

In the second mode, for example, the controller 20 controls the working machine 1 based on a manual operation of a user sitting on the operator's seat 10. The controller 20 controls (operates) the working device 2, the prime mover 4, the transmission 5, the raising/lowering device 8, the steering 11, and the like based on a signal (operation signal) input from the manual operator 12.

The controller 20 is switched between the first mode and the second mode, for example, based on information input from the input interface. For example, when the display 23 receives an operation of switching between the first mode and the second mode, the controller 20 switches the mode in response to the operation. Furthermore, when an operable terminal such as a smartphone receives an operation of switching between the first mode and the second mode and the first communicator 22 receives information concerning the operation, the controller 20 switches the mode in accordance with the operation information. Note that the controller 20 may switch between the first mode and the second mode based on an operation signal from the manual operator 12 or may automatically switch between the first mode and the second mode in the case where a predetermined condition is satisfied.

Although the controller 20 including the automatic operation controller 20b has been described as an example of the assist device 100 in the above embodiment, it is only necessary that the assist device 100 can assist work (at least one of travel or work) of the working machine 1 based on the estimated position EP estimated by the position estimator 20a. For example, the controller 20 may include an automatic steering controller that controls a steering angle of the traveling vehicle body 3 so that the traveling vehicle body 3 travels along the scheduled traveling route L in addition to or instead of the automatic operation controller 20b. Even in this case, the controller 20 can be switched between the first mode (assist mode) in which the automatic steering controller controls travel (steering angle) of the working machine 1 based on the estimated position EP and the second mode (manual mode) in which at least one of travel of the working machine 1 or work done by the working machine 1 is controlled based on a user's manual operation.

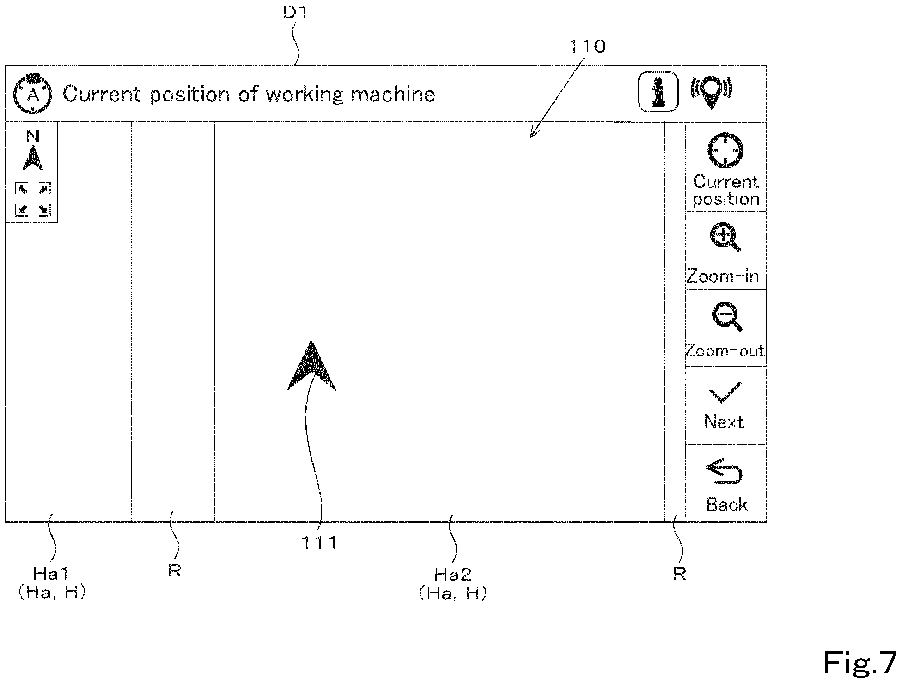

The working machine 1 may use, as the assist device 100, the display 23 that displays the current position of the working machine 1 on a field map 110 indicative of a field around the estimated position EP estimated by the position estimator 20a based on the estimated position EP and the field map 110. The display 23 displays a screen D1 (map screen) indicative of the estimated position EP on the field map 110 upon receipt of a predetermined operation. FIG. 7 illustrates an example of the map screen D1. The map screen D1 displays, as an icon 111, the position of the working machine 1 based on the estimated position EP on the field map 110. In this case, it is only necessary that the map screen D1 can display the current position of the working machine 1 on the field map 110, and the field map 110 displayed by the map screen D1 is not limited to the worksite H where the working machine 1 is located and may include another worksite H or the road R around the worksite H. Furthermore, the map screen D1 may display the scheduled traveling route L on the field map 110.

Note that the display 23 may be a display provided, for example, around the operator's seat 10 of the working machine 1 or may be a mobile terminal which a user carries, an administrator terminal that monitors work of the working machine 1, or the like. Examples of the mobile terminal and the administrator terminal include terminals such as a smartphone (multi-function mobile phone), a tablet PC, and a PDA and a stationary computer such as a personal computer.

The assist system S for the working machine 1 may include a position detector 26 that detects the position of the working machine 1 based on one or more satellite signals from one or more positioning satellites and detect the position of the working machine 1 separately from the estimated position EP estimated by the position estimator 20a. In the following description, the position of the working machine 1 detected by the position detector 26 is referred to as a "detected position DP".

The position detector 26 receives a satellite signal from a satellite positioning system by a GPS antenna 26a and detects the position of the working machine 1 based on the satellite signal. As the detection of the position of the working machine 1, the position detector 26 detects a predetermined position of the working machine 1. For example, the position detector 26 performs the position detection based on the same position of the working machine 1 as the reference position used for the position estimation performed by the position estimator 20a. In the present embodiment, the position of the working machine 1 detected by the position detector 26 is, for example, a position of the GPS antenna 26a, and the position estimator 20a estimates the position of the GPS antenna 26a as the estimated position EP. Note that the detected position DP is not limited to the position of the GPS antenna 26a and may be another position of the working machine 1 corrected based on the position of the GPS antenna.

The position detector 26 may include an inertial measurement unit 26b (IMU) including an acceleration sensor, a gyroscope sensor, and the like. The position detector 26 may detect tilt information (a roll angle, a pitch angle, and a yaw angle) of the machine body or the like by the inertial measurement unit 26b and correct the detected position DP based on the tilt information.

As described above, in the case where the working machine 1 includes the position detector 26, the assist device 100 may assist work of the working machine 1 based on the detected position DP instead of the estimated position EP. In this case, the assist device 100 may switch a vehicle body position VP used for a work assistance between the estimated position EP and the detected position DP in accordance with an intensity of the satellite signal, reliability of the estimated position EP, or the like.

Next, the server 40 is described. The server 40 assists user's work in the worksite H. For example, the server 40 manages a work record and the like. The work record is a record of work performed on the worksite H and/or a work target in the worksite H. Note that the work record may include work performed by the working machine 1, work performed by another working machine 1, and work manually performed by a user.

The server 40 is, for example, installed at a farm machinery manufacturer, a farmers' cooperative, a management company, or the like. As illustrated in FIG. 1, the server 40 includes the information processor 41. The information processor 41 includes one or more memories, various analog circuits, various digital circuits, and the like. The one or more memories store therein a software program to be executed by one or more processors and various kinds of data. The information processor 41 can read out a software program from the one or more memories and perform various processes based on the software program by the one or more processors, as with the controller 20. The information processor 41 may be capable of performing various processes based on a predetermined logic circuit by the one or more processors, as with the controller 20, and detailed description thereof is omitted.

As illustrated in FIG. 1, the server 40 includes the database 42. The database 42 is a nonvolatile memory such as an HDD or an SSD, or the like and stores therein information such as a work record.

As illustrated in FIG. 1, the server 40 includes a second communicator 43. The second communicator 43 is a device that transmits various data to an outside (e.g., the working machine 1, a mobile terminal, or the like) of the server 40 and receives data transmitted from the outside. The second communicator 43 can communicate with the first communicator 22 wirelessly or by wire. Specifically, the second communicator 43 wirelessly communicates with the outside by using IEEE802.11 series Wi-Fi (Wireless Fidelity, Registered Trademark), which is a communication standard, a mobile communication network, a data communication network, or the like.

Management of the work record by the server 40 is described in detail below. The information processor 41 of the server 40 includes a record manager 41a. The record manager 41a is, for example, a memory or a software program stored in the memory and is executed by the information processor 41.

The record manager 41a acquires a work record transmitted from a mobile terminal which a user or the like carries or an administrator terminal that is operated by an administrator (hereinafter referred to as an input terminal 50) and causes the work record to be stored in the database 42. Specifically, for example, when a user completes work, the user performs predetermined operation on the input terminal 50, and the input terminal 50 displays a predetermined first management screen. The first management screen is, for example, a screen on which record information such as the worksite H where work was performed, work content, and date and time of work can be input. Note that the first management screen may receive input of the working device 2 used for the work or the user who performed the work instead of or in addition to the work content.

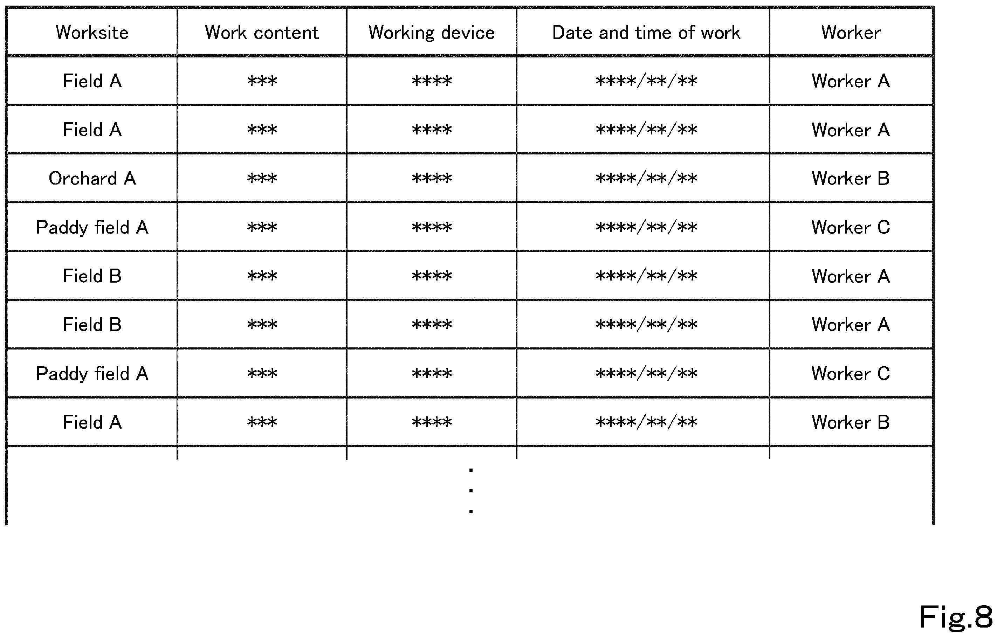

When the user inputs the record information on the first management screen, the input terminal 50 transmits the input record information to the server 40. Thus, the second communicator 43 of the server 40 receives the record information, and the record manager 41a acquires the record information. The record manager 41a causes the acquired record information to be stored in the database 42. In this case, the record manager 41a may cause the record information to be stored in the database 42 after reshaping (converting) the record information into data that is easily processed by the information processor 41 or the like. In this way, content of work (work content) performed in each worksite H and date and time of work when the work was performed are stored in association with each other in the database 42 of the server 40 (see FIG. 8).

The position estimator 20a is configured or programmed to modify, based on the work status in each of the one or more worksites H, an area in the environmental map information M to be referenced by the position estimator 20a and estimate the position by referencing the modified area. Specifically, the assist system S for the working machine 1 includes a selector 41b that selects at least one worksite H in which the work status satisfies a predetermined condition from the one or more worksites H of the environmental map information M, and the position estimator 20a excludes the corresponding at least one piece of map information relating to the at least one worksite H selected by the selector 41b from the environmental map information (M) to modify the area in the environmental map information (M) that is referenced by the position estimator 20a. More specifically, the assist system S for the working machine 1 includes an updater 20c that updates the corresponding at least one piece of map information relating to the at least one worksite H selected by the selector 41b based on the sensing result, and the position estimator 20a estimates the position based on the environmental map information M which includes the corresponding at least one piece of map information updated by the updater 20c. The selector 41b and the updater 20c are described in detail below.

As illustrated in FIG. 1, in the present embodiment, the selector 41b is provided in the server 40. The selector 41b is, for example, a software program stored in a memory or the database 42 and is executed by the information processor 41.

The selector 41b select at least one agricultural field Ha from the one or more agricultural fields Ha based on the work status which includes a work record relating to each of the one or more worksites H (agricultural fields Ha). For example, the selector 41b selects at least one agricultural field Ha which has possibly changed in shape due to work based on the work record. When new record information is stored in the database 42, the selector 41b acquires the record information. The selector 41b references the acquired record information and determines whether or not the worksite H included in the record information has possibly changed in shape due to work based on work content and/or the working device 2 included in the record information.

Examples of the work performed by the working device 2 that possibly changes the shape of the worksite H include cultivation work, ridge making, groove cutting, harvesting of crops, mowing of hay or the like, spreading of hay or the like, raking of hay or the like, and molding of hay or the like. Examples of the working device 2 that perform these kinds of work include a cultivator, a ridge maker, a groove cutter, a harvester, a mower, a tedder, a rake, and a baler.

On the other hand, example of work performed by the working device 2 that does not change the shape of the worksite H include fertilizer spreading, agricultural chemical spreading, and sowing work. Examples of the working device 2 that perform these kinds of work include a fertilizer spreader, an agricultural chemical spreader, and a seeder.

In a case where the selector 41b determines that the worksite H included in the record information has possibly changed in shape due to work, the selector 41b selects this worksite H. On the other hand, in the case where the selector 41b determines that the worksite H included in the record information has not changed in shape due to work, the selector 41b does not select this worksite H.

Note that although a case where when new record information is stored in the database 42, the selector 41b acquires the record information has been described in the above example, this is not restrictive. That is, it is only necessary that the selector 41b acquire record information by referencing the database 42 at an appropriate timing.

After selecting the worksite H, the selector 41b outputs a selection result (selection information) relating to the worksite H to the updater 20c. Specifically, the selector 41b outputs, as selection information, information concerning the worksite H to the updater 20c. The information concerning the worksite H is, for example, position information (e.g., latitude and longitude) of the worksite H.

Note that the information concerning the worksite H may be any information from which the worksite H can be determined and is not limited to the position information of the worksite H. The information concerning the worksite H may be, for example, identification information unique to the worksite H.

The selector 41b may output, as the selection result relating to the worksite H, position information of the worksite H and other information associated with the position information to the updater 20c. For example, the selector 41b may extract corresponding date and time of work from the work record and associate, as reference date and time, the date and time of work with the position information of the worksite H.

Although a case where the selector 41b is provided in the server 40 has been described above, the selector 41b may be provided in a place other than the server 40. For example, the selector 41b may be provided in the working machine 1. In this case, the selector 41b of the working machine 1 is executed by the controller 20.

As illustrated in FIG. 1, in the present embodiment, the updater 20c is provided in the working machine 1. The updater 20c is, for example, a software program stored in the memory or the storing device 21 and is executed by the controller 20. When the selector 41b selects the worksite H, the updater 20c performs a first process based on the selected worksite H. Specifically, upon receipt of the selection result (selection information) from the selector 41b via the second communicator 43 and the first communicator 22, the updater 20c performs the first process based on the selection information.

As the first process, the updater 20c deletes the corresponding map information relating to the worksite H selected by the selector 41b. Upon receipt of the selection information, the updater 20c extracts the environmental map information M stored in the storing device 21 and including the selected worksite H by referencing the storing device 21. In this case, the updater 20c extracts the environmental map information M based on the position information of the worksite H included in the selection information.

The updater 20c compares the defined date and time associated with the environmental map information M extracted from the storing device 21 and the reference date and time. In a case where the updater 20c determines that the reference date and time are later than the defined date and time, the updater 20c deletes the map information relating to the extracted worksite H from the environmental map information M. Specifically, the updater 20c deletes each point cloud data located in a vertical direction of an area where the extracted worksite H is located. On the other hand, in the case where the updater 20c determines that the reference date and time are earlier than the defined date and time, the updater 20c does not delete the map information relating to the extracted worksite H from the environmental map information M.

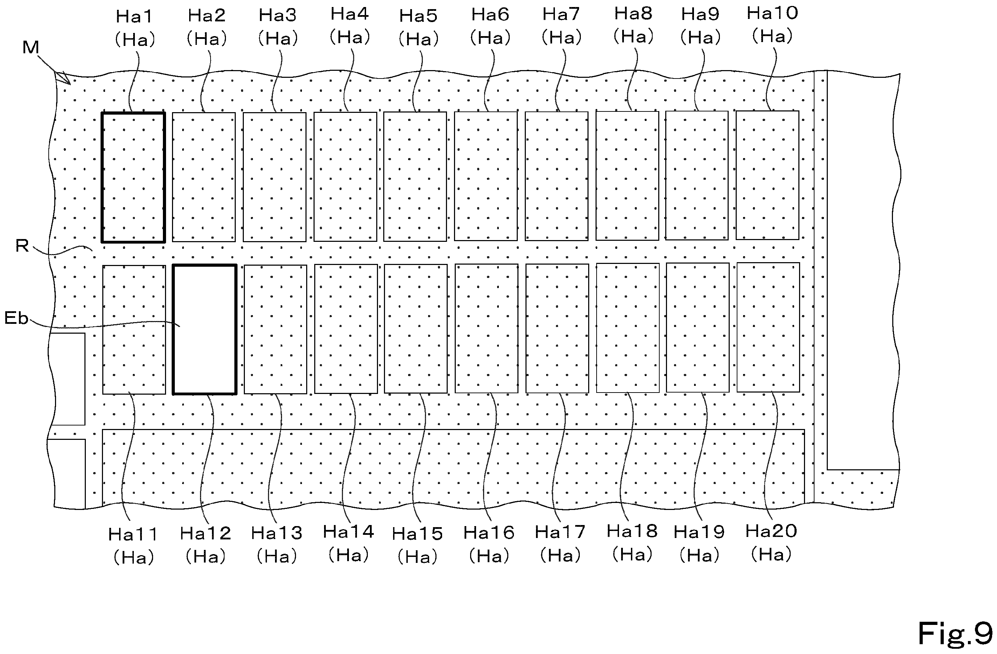

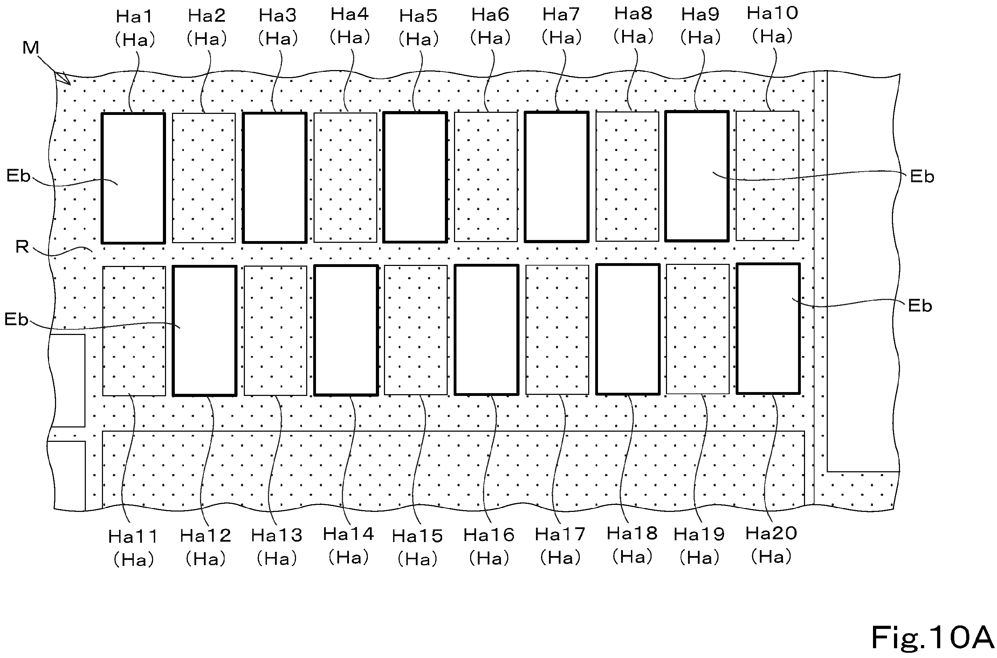

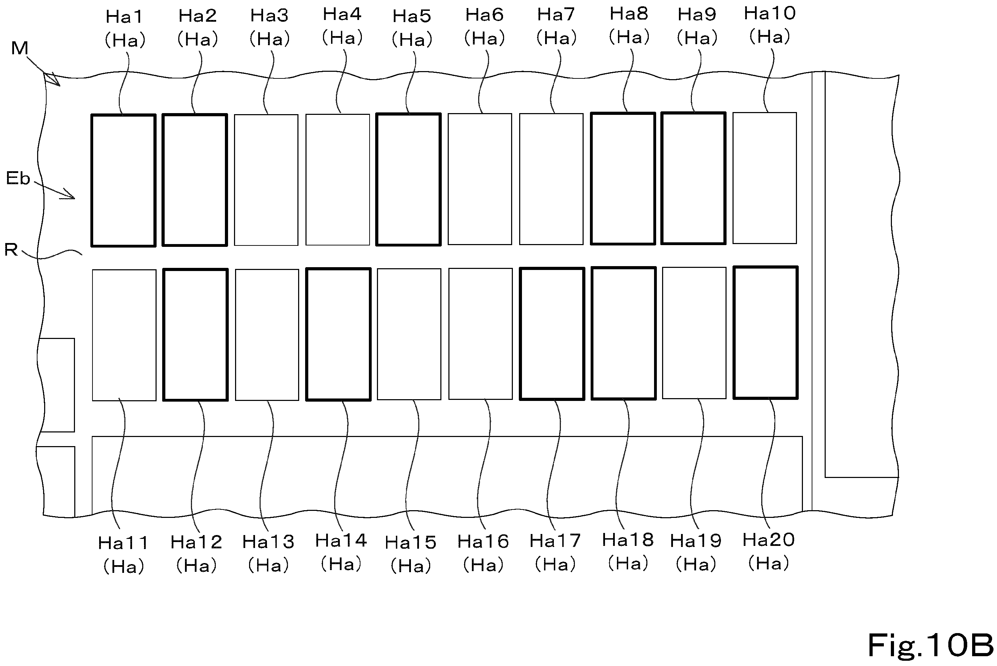

FIG. 9 illustrates the first process performed by the updater 20c. FIG. 9 illustrates the environmental map information M after the first process performed by the updater 20c. In FIG. 9 (and FIGS. 10A and 10B), a contour of the agricultural field Ha selected by the selector 41b is indicated by a thicker line than a contour of the agricultural field Ha that is not selected by the selector 41b. An area where no point cloud data is registered is given no dot. In FIG. 9 (and FIGS. 10A and 10B), an area where point cloud data is registered is given dots, and an area where point cloud data has been deleted and no point cloud data is registered is given no dot.

In the example illustrated in FIG. 9, a case where the selector 41b has selected the first agricultural field Ha1 and the twelfth agricultural field Ha12 is illustrated. In the first agricultural field Ha1, ridge making work was performed before the defined date and time of the environmental map information M (first work record). In the twelfth agricultural field Ha12, harvesting work was performed after the defined date and time of the environmental map information M (second work record).

With the first work record, the ridge making work was performed before the defined date and time of the environmental map information M, and therefore the updater 20c does not extract map information relating to the first agricultural field Ha1 and does not delete the map information relating to the first agricultural field Ha1. On the other hand, according to the second work record, the harvesting work was performed after the defined date and time of the environmental map information M, and therefore the updater 20c extracts map information relating to the twelfth agricultural field Ha12 and deletes the map information relating to the twelfth agricultural field Ha12.

Note that as a result of deletion of map information in the first process, the updater 20c may delete the entire environmental map information M depending on the proportion and/or the distribution of area(s) (portion(s)) of the environmental map information M in which no point cloud data is registered. For example, in the case where the proportion of area(s) deleted by the updater 20c in the first process to the range of the environmental map information M is equal to or greater than a predetermined threshold (e.g., 40%), the updater 20c deletes the environmental map information M. Accordingly, in the case where the proportion of area(s) in which point cloud data is deleted by the updater 20c in the first process is equal to or greater than the predetermined threshold, the updater 20c deletes point cloud data in all areas other than the area(s) in which point cloud data is deleted in the first process. The predetermined threshold is not limited to 40% and may be a value other than 40%, such as 30% or 50%. The predetermined threshold may be a value that can be changed as appropriate based on information received by the input interface.

In this case, even in the case where the proportion of area(s) where point cloud data is deleted by the updater 20c in the first process is equal to or greater than the predetermined threshold, the updater 20c does not need to delete the environmental map information M in the case where the positions of pieces of map information where the point cloud data is deleted are relatively unevenly distributed. For example, in the case where the proportion of areas where point cloud data is deleted by the updater 20c in the first process is equal to or greater than the predetermined threshold and worksites H where the point cloud data is deleted are not adjacent to each other, the updater 20c does not delete the environmental map information M (see FIG. 10A). FIG. 10A illustrates a case where the updater 20c deletes, in the first process, pieces of map information in the first agricultural field Ha1, the third agricultural field Ha3, the fifth agricultural field Ha5, the seventh agricultural field Ha7, the ninth agricultural field Ha9, the twelfth agricultural field Ha12, the fourteenth agricultural field Ha14, the sixteenth agricultural field Ha16, the eighteenth agricultural field Ha18, and the twentieth agricultural field Ha20. In the example illustrated in FIG. 10A, pieces of map information deleted by the updater 20c in the first process are not adjacent to each other, and therefore the updater 20c does not delete the environmental map information M.

On the other hand, in the case where the proportion of area(s) where point cloud data is deleted by the updater 20c in the first process is equal to or greater than the predetermined threshold and worksites H where the point cloud data is deleted are adjacent to each other, the updater 20c deletes the environmental map information M (see FIG. 10B). FIG. 10B illustrates a case where the updater 20c deletes, in the first process, pieces of map information in the first agricultural field Ha1, the second agricultural field Ha2, the fifth agricultural field Ha5, the eighth agricultural field Ha8, the ninth agricultural field Ha9, the twelfth agricultural field Ha12, the fourteenth agricultural field Ha14, the seventeenth agricultural field Ha17, the eighteenth agricultural field Ha18, and the twentieth agricultural field Ha20. In the example illustrated in Fig. 10B, among the pieces of map information deleted by the updater 20c in the first process, the first agricultural field Ha1 and the second agricultural field Ha2 are adjacent to each other, the eighth agricultural field Ha8 and the ninth agricultural field Ha9 are adjacent to each other, and the seventeenth agricultural field Ha17 and the eighteenth agricultural field Ha18 are adjacent to each other. Accordingly, the updater 20c deletes the environmental map information M.

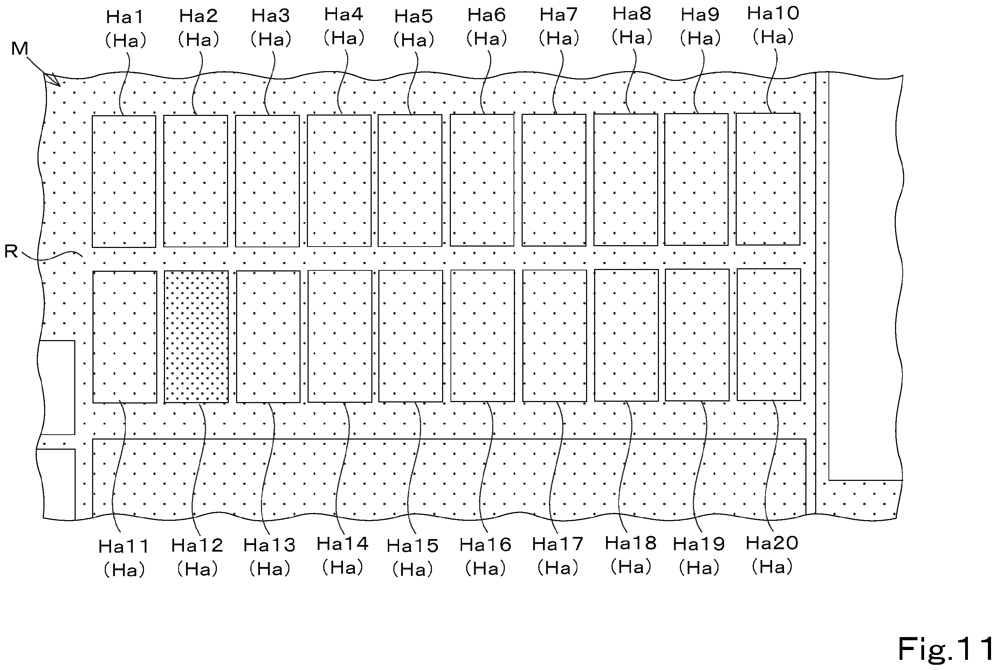

After performing the first process, the updater 20c performs a second process to reregister, based on the sensing result, information or data for a portion from which the piece(s) of map information has/have been deleted in the first process. In the second process, the updater 20c reregisters, based on the sensing result, information or data for a portion Eb (deletion area, deletion portion) of the environmental map information M from which the piece of map information has been deleted in the first process (see FIG. 11). FIG. 11 illustrates the second process performed by the updater 20c. FIG. 11 illustrates a case where the updater 20c reregisters, in the second process, information or data for the deletion portion Eb in which data deletion was performed in the first process in the example illustrated in FIG. 9. In FIG. 11, the area where point cloud data has been reregistered by the updater 20c is indicated by denser dots than an area that has not been updated. Accordingly, in the example illustrated in FIG. 11, the updater 20c reregisters point cloud data in the twelfth agricultural field Ha12.

For example, in the case where the controller 20 is in the second mode, the updater 20c reregisters information or data for the deletion portion Eb based on the detected position DP detected by the position detector 26 and a sensing result at the detected position DP (second process). Specifically, the updater 20c registers, in the deletion portion Eb, point cloud data (detected point cloud data) of the sensing result at each detected position DP. As a result, the updater 20c can sequentially register new point cloud data instead of the point cloud data deleted in the first process in the environmental map information M as the working machine 1 travels.

Note that although the updater 20c performs the second process in the case where the controller 20 is in the second mode in the above example, this is not restrictive. For example, the updater 20c may reregister information or data for the deletion portion Eb based on the detected position DP and the sensing result at the detected position DP (second process) in the case where the controller 20 in the first mode is controlling automatic driving of the working machine 1 based on the detected position DP.

Although a case where the updater 20c is provided in the working machine 1 has been described above, the selector 41b may be provided in a place other than the working machine 1. For example, the updater may be provided in the server 40. In this case, the updater is executed by the information processor 41. In a case where the updater of the server 40 updates the environmental map information M, the server 40 transmits the updated environmental map information M to the controller 20 via the second communicator 43 and the first communicator 22. When the first communicator 22 receives the updated environmental map information M, the controller 20 overwrites the environmental map information M stored in the storing device 21 with the updated environmental map information M.

With the above configuration, the position estimator 20a does not reference the deleted map information during a period from deletion of the map information in the first process to reregistration of the map information in the second process, and thus modifies an area in the environmental map information M that is referenced by the position estimator 20a.

Note that the assist system S for the working machine 1 may include a notifier 120 that provides a warning notification when the selector 41b selects at least one worksite H and the position estimator 20a is to estimate the position without referencing information about the selected at least one worksite H. In other words, the notifier 120 provides a notification during a period from deletion of map information in the first process to reregistration of information for the deletion portion Eb in the second process.

The notifier 120 provides the notification to a user by using light, sound, or the like. The notifier 120 is, for example, provided in the working machine 1. The notifier 120 is provided close to the operator's seat 10. Examples of the notifier 120 include the display 23, a speaker, and a lamp. The notifier 120 is connected to the controller 20 and is actuated by a control signal output from the controller 20. In a case where the display 23 also functions as the notifier 120, the display 23 (the notifier 120) displays a message indicating that position estimation performed by the position estimator 20a is unavailable in at least one worksite H during a period from deletion of map information in the first process to reregistration of the map information in the second process.

The assist device 100 may prioritize another type of work assistance over the work assistance based on the estimated position EP at or in the vicinity of the at least one worksite H selected by the selector 41b. Specifically, the assist device 100 may prioritize a work assistance based on the detected position DP over the work assistance based on the estimated position EP at or in the vicinity of the at least one worksite H selected by the selector 41b. In other words, in the case where the working machine 1 is located at or in the vicinity of the deletion portion Eb of the environmental map information M, the controller 20 performs the work assistance based on the detected position DP in priority to the work assistance based on the estimated position EP.

For example, in the case where the assist device 100 is the controller 20, the controller 20 in the first mode determines whether or not the working machine 1 is located at or in the vicinity of the deletion portion Eb of the environmental map information M based on the estimated position EP and/or the detected position DP. For example, in the case where the vehicle body position VP is located in an expanded area Ec obtained by expanding (enlarging) the deletion portion Eb by a predetermined amount, the controller 20 determines that the vehicle body position VP is located at or in the vicinity of the deletion portion Eb.

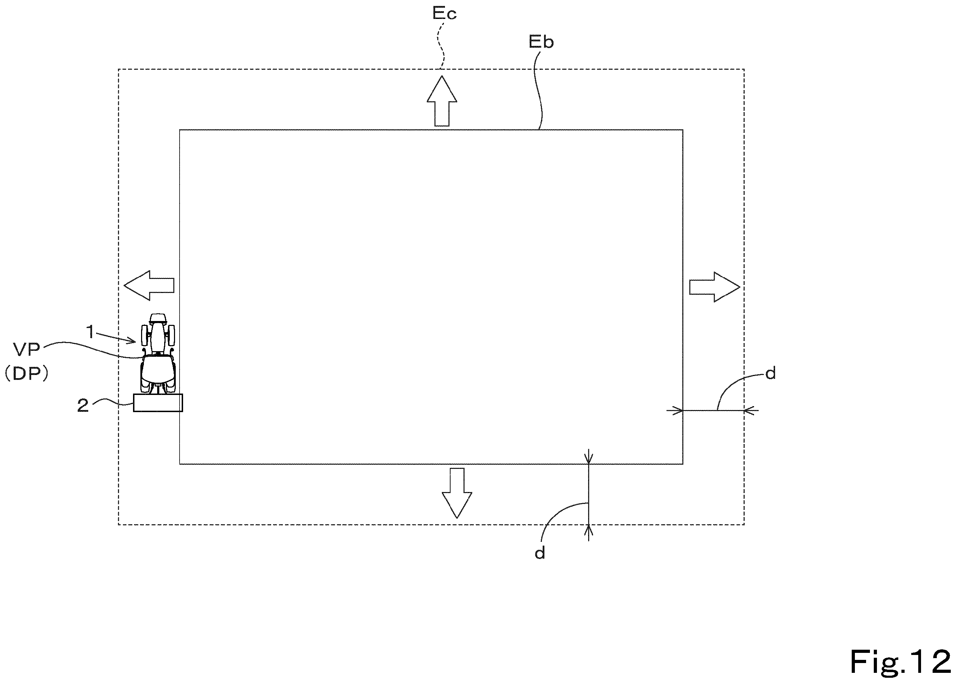

FIG. 12 illustrates an example of the expanded area Ec. In the example illustrated in FIG. 12, an area expanded outward from an outer periphery of the deletion portion Eb by a predetermined distance d is illustrated as the expanded area Ec. The predetermined distance d is, for example, defined to 20 m. Note that the predetermined distance d need just be defined in accordance with a sensing range of the sensor 25 (ranging sensor) and may be defined to a distance equal to or less than the sensing range. Accordingly, the predetermined distance d is not limited to 20 m and may a value other than 20 m, such as 10 m or 30 m. The predetermined distance d may be a value that can be changed as appropriate based on information received by the input interface.

In a case where the controller 20 in the first mode determines that the vehicle body position VP is located in the expanded area Ec, the controller 20 uses the detected position DP in priority to the estimated position EP as the vehicle body position VP used for automatic driving control. That is, in the case where the working machine 1 is located in the expanded area Ec, the controller 20 prioritizes automatic driving control based on the detected position DP over automatic driving control based on the estimated position EP. Note that the estimated position EP may be used depending on accuracy (reliability) of the detected position DP in the expanded area Ec since the SLAM algorithm is a technology that can estimate a position by performing position estimation and addition of the environmental map information M even in the case where accuracy of the estimated position EP is relatively low and there is no prior environmental map information M.

Accordingly, in the case where the working machine 1 enters the expanded area Ec, the controller 20 in the first mode performs automatic driving control based on the detected position DP in priority to automatic driving control based on the estimated position EP. In a case where the working machine 1 leaves the expanded area Ec, the controller 20 in the first mode performs automatic driving control based on the estimated position EP or the detected position DP.

A case where the assist device 100 is the display 23 is described below. Similarly, the controller 20 determines whether or not the working machine 1 is located in the expanded area Ec based on the estimated position EP and/or the detected position DP. In a case where the controller 20 determines that the vehicle body position VP is located in the expanded area Ec, the controller 20 uses the detected position DP in priority to the estimated position EP as a position of the working machine 1 displayed on the field map 110 of the map screen D1. That is, in the case where the working machine 1 is located in the expanded area Ec, the controller 20 prioritizes display of the position of the working machine 1 based on the detected position DP over display of the position of the working machine 1 based on the estimated position EP.

Accordingly, in the case where the working machine 1 enters the expanded area Ec, the controller 20 preferentially displays the position based on the detected position DP as the position of the working machine 1 displayed on the field map 110 of the map screen D1. In a case where the working machine 1 leaves the expanded area Ec, the controller 20 displays the position based on the estimated position EP or the detected position DP as the position of the working machine 1 displayed on the field map 110 of the map screen D1.

Note that although the assist device 100 prioritizes the work assistance based on the detected position DP over the work assistance based on the estimated position EP in the case where the working machine 1 is located inside the expanded area Ec in the above example, it is only necessary that the work assistance based on the estimated position EP is not prioritized over the work assistance based on the detected position DP in the case where the working machine 1 is located inside the expanded area Ec. For example, inside the expanded area Ec, the controller 20 may control at least one of travel of the working machine 1 or work done by the working machine 1 in the second mode in priority to the first mode.

In this case, the controller 20 in the first mode may automatically switch the first mode to the second mode in the case where the controller 20 determines that the vehicle body position VP is located in the expanded area Ec. That is, since the controller 20 switches from the first mode to the second mode in the case where the working machine 1 is located in the expanded area Ec, the automatic driving control based on the detected position DP is prioritized over the automatic driving control based on the estimated position EP. Accordingly, the controller 20 in the first mode may switch the first mode to the second mode in the case where the working machine 1 enters the expanded area Ec.

In a case where the working machine 1 leaves the expanded area Ec, the controller 20 in the second mode continues the second mode. In this case, the display 23 may display information indicating that the working machine 1 has moved out of the expanded area Ec and the mode is switchable from the second mode to the first mode. In a case where another notifier 120 different from the display 23 is provided, a notification indicating that the mode is switchable from the second mode to the first mode may be provided by using sound or light.

Although a case where inside the expanded area Ec, the controller 20 controls at least one of travel of the working machine 1 or work done by the working machine 1 in the second mode instead of the first mode has been described in the above example, it is only necessary that the work assistance based on the estimated position EP is not prioritized over the work assistance based on the detected position DP in the case where the working machine 1 is located inside the expanded area Ec, and the second mode may be any mode in which a user manually operates the working machine 1. Therefore, the second mode need not be a mode in which a user on the working machine 1 directly operates the working machine 1 by operating the manual operator 12. That is, in the case where the assist system S for the working machine 1 includes a remote controller 60 for remotely operating the working machine 1, the second mode may be a remote operation mode. The remote controller 60 can receive a user's operation and communicate with the controller 20 via the first communicator 22. Accordingly, when the user operates the remote controller 60, the remote controller 60 outputs an operation signal to the controller 20 via the first communicator 22. In the second mode, the controller 20 thus controls (operates) units such as the working device 2, the prime mover 4, the transmission 5, the raising/lowering device 8, and the steering 11 based on the operation signal from the remote controller 60 input via the first communicator 22.

Although the selector 41b selects a worksite H by determining whether or not the worksite H has possibly changed in shape due to work based on the work record in the above description, a condition on which the selector 41b selects a worksite H based on the work record is not limited to this. For example, the selector 41b may select at least one agricultural field Ha in which the degree of growth of a planted crop is equal or greater than a predetermined degree based on the work record instead of or in addition to change in shape of the worksite H caused by work.

For example, in the case where work linked with the degree of growth of a crop, work performed in a state where the degree of growth of a crop has possibly changed, or the like is performed in an agricultural field Ha, the selector 41b determines that the degree of growth of a planted crop in the agricultural field Ha is equal or greater than the predetermined degree and selects the agricultural field Ha.

For example, in the case where additional fertilization work performed by a fertilizer spreader or pest control work performed by an agricultural chemical spreader is linked with the degree of growth of a crop, the selector 41b can determine the degree of growth of the crop based on a fact that such work has been performed or the number of times of the work.

A height of a seedling (rice seedling) is sometimes higher than approximately 50 cm when groove cutting is performed on a paddy field, and therefore the selector 41b can determine the degree of growth of the seedling (rice seedling) based on a fact that the groove cutting work has been performed.

Accordingly, in the case where the selector 41b determines that the degree of growth of a crop in a worksite H included in the record information is equal or greater than the predetermined degree, the selector 41b selects the worksite H. On the other hand, in the case where the selector 41b determines that the degree of growth of a crop in a worksite H included in the record information is less than the predetermined degree, the selector 41b does not select the worksite H.

When the selector 41b selects the worksite H, the selector 41b outputs, as the selection information, for example, information concerning the worksite H (e.g., position information of the worksite H) and reference date and time (e.g., date and time of work based on the work record) to the updater 20c.

The selector 41b may select at least one agricultural field Ha based on the work status which includes a work plan relating to each of the one or more agricultural fields Ha instead of or in addition to the work record relating to each of the one or more agricultural fields Ha. The work plan is a plan of work on the worksite H and/or a work target in the worksite H. In this case, the selector 41b selects, based on the work plan, at least one agricultural field Ha in which the degree of growth of a planted crop is equal or greater than a predetermined degree and/or at least one agricultural field Ha which has possibly changed in shape due to work. For example, the selector 41b selects a worksite H defined in the work plan in the case where the work plan defines that post work of relevant types of work (prior work and post work) is to be performed and the prior work is work that changes the shape of the worksite H.

One example of the relevant types of work is ridge making work as prior work and sowing work as post work. In this case, a first working device 2 that performs the prior work is a ridge maker, and a second working device 2 that performs the post work is a seeder.

Another example of the relevant types of work is mowing of hay or the like, spreading of hay or the like, raking of hay or the like as prior work and molding of hay or the like as post work. In this case, the first working device 2 that performs the prior work is a mower, a tedder, or a rake, and the second working device 2 that performs the post work is a baler.

Management of the work plan by the server 40 is described in detail below. The information processor 41 of the server 40 includes a plan manager 41c. The plan manager 41c is, for example, a memory or a software program stored in the memory and is executed by the information processor 41.

The plan manager 41c acquires the work plan transmitted from the input terminal 50 and causes the work plan to be stored in the database 42. For example, the user performs predetermined operation on the input terminal 50, and the input terminal 50 displays a predetermined second management screen. The second management screen is, for example, a screen on which plan information such as a worksite H where work is scheduled to be performed, work content, and scheduled date and time can be input. Note that the second management screen may receive input of the working device 2 that is scheduled to perform work or a user who is scheduled to perform work instead of or in addition to work content.

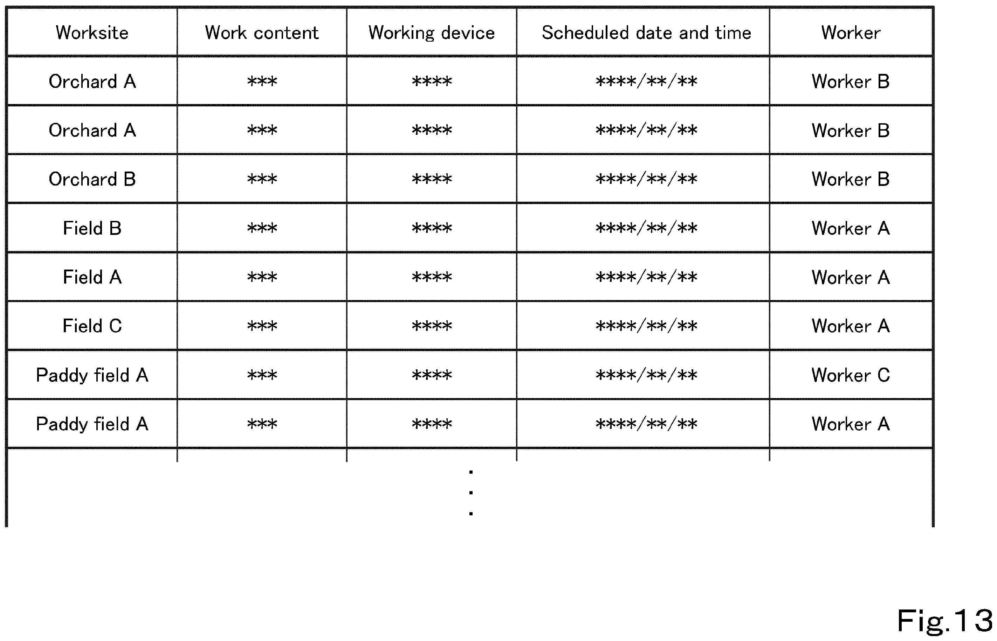

When the user inputs the plan information on the second management screen, the input terminal 50 transmits the input plan information to the server 40. Thus, the second communicator 43 of the server 40 receives the plan information, and the plan manager 41c acquires the plan information. The plan manager 41c causes the acquired plan information to be stored in the database 42. In this case, the plan manager 41c may cause the plan information to be stored in the database 42 after reshaping (converting) the plan information into data that is easily processed by the information processor 41 or the like. In this way, content of work (work content) scheduled to be performed in each worksite H and date and time when the work is scheduled to be performed are stored in association with each other in the database 42 of the server 40 (see FIG. 13).

When new plan information is stored in the database 42, the selector 41b acquires the plan information. The selector 41b references the acquired plan information and determines whether or not the worksite H included in the plan information has possibly changed in shape due to prior work based on work content and/or the working device 2 included in the plan information.

In a case where the selector 41b determines that the worksite H included in the plan information has possibly changed in shape due to prior work, the selector 41b selects the worksite H. On the other hand, in the case where the selector 41b determines that the worksite H included in the plan information has not changed in shape due to prior work, the selector 41b does not select the worksite H.

When the selector 41b selects the worksite H, the selector 41b outputs, as the selection information, for example, information concerning the worksite H (e.g., position information of the worksite H) or reference date and time (e.g., date of prior work calculated from scheduled date and time based on the work plan) to the updater 20c.

In this way, the selector 41b can select the agricultural field Ha based on the work status which includes the work plan relating to the agricultural field Ha instead of or in addition to the work record relating to the agricultural field Ha.

Although work performed by the working machine 1 in the agricultural field Ha has been mainly described as work in the worksite H in the above embodiment, the selector 41b may, in the case where the agricultural field Ha is a paddy field, select a paddy field (agricultural field Ha) in accordance with the work status including a status of water supplying work and water draining work in the paddy field. The selector 41b determines whether or not the work status satisfies a predetermined condition based on a state of a water manager 70 that is set on a paddy field or the like, and performs water supplying work and water draining work in the paddy field.

The water manager 70 performs water supplying work or water draining work in a paddy field. The water manager 70 thus performs flooding, intermittent irrigation, midseason drainage, and surface drainage in the paddy field. The water manager 70 is installed at a border ridge of the paddy field or inside the paddy field. One or more water managers 70 are provided for each paddy field. In other words, the water manager 70 is associated with each worksite H (paddy field).

Note that the water manager 70 is provided on each of a water supply side and a water draining side of the paddy field. In the following description, for convenience of description, the water manager 70 on the water supplying side and the water manager 70 on the water draining side are collectively described.

As illustrated in FIG. 1, the water manager 70 includes a management controller 71, an adjuster 73, and a third communicator 74. The management controller 71 includes one or more memories, various analog circuits, various digital circuits, and the like. The one or more memories store therein a software program to be executed by one or more processors and various kinds of data. The management controller 71 can read out a software program from the one or more memories and perform various processes based on the software program by the one or more processors, as with the controller 20. Note that the software program may be stored in a management storing unit (memory and/or storage) 72 (a nonvolatile memory such as an HDD or an SSD) or the like communicably connected to the management controller 71 and may be installed from the management storing unit 72 or the like into the memory. The management controller 71 may be capable of performing various processes based on a predetermined logic circuit by the one or more processors, as with the controller 20, and detailed description thereof is omitted.

The management storing unit 72 and the adjuster 73 are connected to the management controller 71. The management controller 71 controls the adjuster 73, for example, in accordance with the software program stored in the management storing unit 72.

The adjuster 73 performs water supplying work or water draining work in the paddy field. The adjuster 73 performs the water supplying work or the water draining work under control of the management controller 71. The adjuster 73 of the water manager 70 on the water supplying side is a device that adjust water supply to the paddy field. The adjuster 73 of the water manager 70 on the water supplying side includes, for example, a first gate valve that switches, by an actuator, between a first closed state where water is not supplied from an irrigation channel to the paddy field and a first opened state where water is supplied from the irrigation channel to the paddy field.

The adjuster 73 of the water manager 70 on the water draining side is a device that adjusts surface drainage in the paddy field. The adjuster 73 of the water manager 70 on the water draining side includes, for example, a second gate valve that switches, by an actuator, between a second closed state where water in the paddy field is not drained to a drainage pipe and a second opened state where water in the paddy field is drained to the drainage pipe.

As illustrated in FIG. 1, the water manager 70 includes the third communicator 74. The third communicator 74 is a device that transmits various data to an outside (e.g., the server 40) of the water manager 70 and receives data transmitted from the outside. The third communicator 74 can communicate with the second communicator 43 wirelessly or by wire. Specifically, for example, the third communicator 74 wirelessly communicates with the outside by using IEEE802.11 series Wi-Fi (Wireless Fidelity, Registered Trademark), which is a communication standard, a mobile communication network, a data communication network, or the like.

As illustrated in FIG. 1, the water manager 70 includes a state detector 75. The state detector 75 detects a state of the paddy field. The state detector 75 is electrically connected to the management controller 71 by wire or wirelessly. Examples of the state detector 75 includes a water level sensor that detects a water level of the paddy field, a water temperature sensor that detects a water temperature, an air temperature sensor that detects an air temperature, a humidity sensor that detects a humidity, and a soil temperature sensor that detects a soil temperature. Note that not all of the water level sensor, the water temperature sensor, the air temperature sensor, the humidity sensor, and the soil temperature sensor need be included in the state detector 75.

The state detector 75 is installed in the paddy field and outputs a detection result concerning the state of the paddy field to the management controller 71. The management controller 71 automatically performs water supplying work or water draining work based on the detection result from the state detector 75. Note that the management controller 71 may automatically perform water supplying work or water draining work based on the work plan managed in the server 40. The management controller 71 may perform water supplying work or water draining work based on a manual instruction from a user given by using the input terminal 50 or the like.

The management controller 71 transmits record information of the water supplying work or water draining work performed by the adjuster 73 to the server 40. Specifically, the management controller 71 transmits the record information of the water supplying work or water draining work to the information processor 41 via the third communicator 74 and the second communicator 43. In this case, the management controller 71 transmits, as the record information of the water supplying work or water draining work, information concerning the paddy field where the work has been performed (e.g., position information of the paddy field), work content, date and time of work, and the like to the information processor 41.

Note that the management controller 71 may transmit, as the record information, the water level detected by the water level sensor to the information processor 41 instead of or in addition to the water supplying work or water draining work. When the second communicator 43 of the server 40 receives the record information, the record manager 41a acquires the record information. The record manager 41a causes the acquired record information to be stored in the database 42.

Although a case where the management controller 71 automatically transmits the record information to the information processor 41 (the server 40) has been described as an example in the above example, record information may be input on the first management screen of the input terminal 50, and the record information input to the input terminal 50 may be transmitted to the server 40, as in the case where other work or the like is performed by the working machine 1.

The selector 41b references the record information of the water manager 70 stored in the database 42 and determines whether or not the paddy field (the agricultural field Ha) included in the record information has possibly changed in shape due to work (the water supplying work or water draining work) based on the work content included in the record information. Specifically, the selector 41b references the record information, and selects a paddy field corresponding to the record information in the case where work content is water supplying work or water draining work that causes a relatively large change in water level. For example, in the case where work content is flooding, intermittent irrigation, midseason drainage, or surface drainage of the paddy field, the selector 41b determines that the work has caused a relatively large change in water level and has changed the shape.

The selector 41b may select a paddy field in which the degree of growth of a planted crop (seedling, rice seedling) is equal or greater than a predetermined degree based on the work record. For example, a seedling exhibits relatively large growth after midseason drainage is performed in a paddy field after start of tillering. Accordingly, in the case where the work record is water saturation management performed after midseason drainage of a paddy field, it can be determined that the degree of growth of a crop is relatively large.

When the selector 41b thus selects a paddy field, the selector 41b outputs, as the selection information, for example, information concerning the paddy field (e.g., position information of the paddy field) or reference date and time (e.g., date and time of work based on the work record) to the updater 20c.

Although the work record and/or the work plan have been mainly described as the work status in the above embodiment, the selector 41b may select an agricultural field Ha based on the degree of growth of a crop instead of or in addition to the work record and/or the work plan as the work status since in the case where the worksite H is an agricultural field Ha, the degree of growth of a crop in the agricultural field Ha also changes due to work in the agricultural field Ha. As illustrated in FIG. 1, the assist system S for the working machine 1 includes a growth analyzer 41d that analyzes the degree of growth of a crop.

As illustrated in FIG. 1, in the present embodiment, the growth analyzer 41d is provided in the server 40. The growth analyzer 41d is, for example, a software program stored in a memory or the database 42 and is executed by the information processor 41.

For example, the growth analyzer 41d performs analysis based on a vegetation index (e.g., DVI, RVI, NDVI, GNDVI, SAVI, TSAVI, CAI, MTCI, REP, PRI, and RSI) in each agricultural field Ha based on an image taken by an imager provided in the agricultural field Ha. Examples of the imager include a CCD camera, a CMOS camera, and an infrared camera. In a case where the agricultural field Ha is a paddy field, the imager 76 is provided in the water manager 70. The management controller 71 transmits imaging information including an image taken by the imager 76 to the server 40. Specifically, the management controller 71 transmits imaging information to the information processor 41 via the third communicator 74 and the second communicator 43 at fixed timings (regularly). In this case, the management controller 71 transmits, as the imaging information, information concerning a paddy field (agricultural field Ha) where the image was taken, the taken image, imaging date and time, and the like to the information processor 41.

Note that the imager 76 may be provided in a place other than the water manager 70. For example, the imager 76 may be provided in a device (field server) that collects information concerning an agricultural field Ha and a crop planted in the agricultural field Ha or may be provided in a flying object that can fly over the worksite H. One or more field servers are provided for each agricultural field Ha and are associated with the agricultural field Ha where the field servers are provided, and transmit imaging information to the information processor 41 at fixed timings (regularly). The flying object can detect its own position based on a satellite signal or the like and transmits, as the imaging information, position information indicative of a position of imaging (in other words, information by which the imaged worksite H can be determined), a taken image, imaging date and time, and the like to the information processor 41.

The growth analyzer 41d analyzes a vegetation index in each agricultural field Ha, and causes each agricultural field Ha, a vegetation index of a crop in the agricultural field Ha, and date and time (imaging date and time in the present embodiment) corresponding to the vegetation index to be stored in association with one another as growth information in the database 42.

Note that the growth analyzer 41d deletes growth information of an agricultural field Ha in which mowing work has been performed or gives/deletes a predetermined flag by referencing the record information stored in the database 42.

When new growth information (first growth information) is stored in the database 42, the selector 41b acquires the first growth information. The selector 41b references the acquired first growth information and acquires, based on an agricultural field Ha included in the first growth information, past growth information (second growth information) in the agricultural field Ha from the database 42. The selector 41b acquires, as second growth information by which it is determined that the degree of growth of a planted crop is equal to or greater than a predetermined degree, second growth information of a latest imaging date and time among pieces of second growth information whose vegetation index is different from a vegetation index of the first growth information by a predetermined value or more. In this case, the selector 41b acquires growth information before mowing work based on a flag given to the growth information.

The selector 41b acquires the second growth information, and selects the agricultural field Ha corresponding to the first growth information in the case where it is determined that the degree of growth of a planted crop is equal to or greater than a predetermined degree. On the other hand, in the case where there is no second growth information whose vegetation index is different from the vegetation index of the first growth information by the predetermined value or more and it is determined that the degree of growth of a crop is less than the predetermined degree, the selector 41b does not select the agricultural field Ha corresponding to the first growth information.

The selector 41b can thus select an agricultural field Ha based on the degree of growth of a crop planted in the agricultural field Ha as the work status.

When the selector 41b selects the agricultural field Ha, the selector 41b outputs, as the selection information, for example, information concerning the agricultural field Ha (e.g., position information of the agricultural field Ha) and reference date and time (e.g., imaging date and time of the second growth information) to the updater 20c.

Note that although a case where the selector 41b selects an agricultural field Ha in which the degree of growth of a planted crop is equal to or greater than a predetermined degree based on the vegetation index analyzed by the growth analyzer 41d has been described in the above example, a criterion of selection is not limited to the vegetation index. For example, the information processor 41 may include Artificial Intelligence (AI) as the selector 41b, and the selector 41b may estimate the degree of growth of a crop planted in an agricultural field Ha based on each taken image by machine learning of the AI.

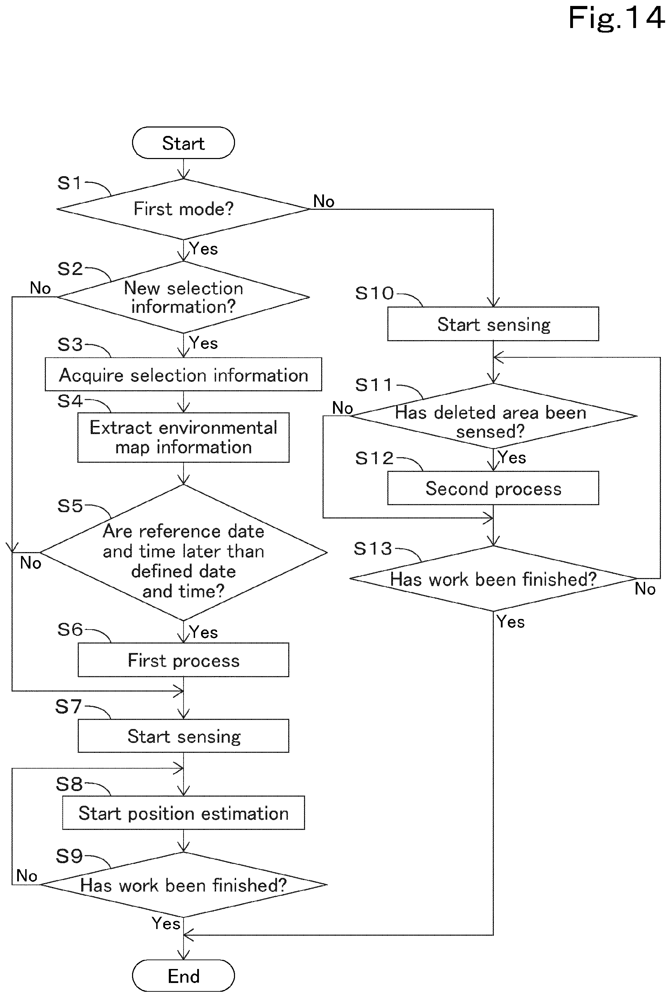

A flow of a series of processes including position estimation performed by the position estimator 20a and the updating process performed by the updater 20c is described below with reference to FIG. 14. FIG. 14 is a flowchart illustrating an example of the position estimation performed by the position estimator 20a and the updating process performed by the updater 20c. Each step in FIG. 14 is performed by the controller 20 in accordance with a software program stored in the memory or the storing device 21.

First, the updater 20c checks whether a current mode is the first mode or the second mode (S1). In a case where the updater 20c determines that the current mode is the first mode (S1: Yes), the updater 20c checks whether or not there is new selection information (S2). Specifically, the updater 20c inquires of the server 40 whether or not there is new selection information via the first communicator 22 and the second communicator 43.

In a case where the updater 20c determines that there is new selection information (S2: Yes), the updater 20c acquires the selection information from the server 40 (the selector 41b) via the first communicator 22 and the second communicator 43 (S3). Upon receipt of the selection information (S3), the updater 20c extracts the environmental map information M stored in the storing device 21 and including a selected worksite H by referencing the storing device 21 (S4). In this case, the updater 20c extracts the environmental map information M based on position information of the worksite H included in the selection information.

The updater 20c compares defined date and time associated with the environmental map information M extracted from the storing device 21 and reference date and time (S5). In a case where the updater 20c determines that the reference date and time are later than the defined date and time (S5: Yes), the updater 20c deletes map information relating to the extracted worksite H from the environmental map information M as the first process (S6). Specifically, the updater 20c deletes each point cloud data located in a vertical direction of an area where the extracted worksite H is located. Thus, the worksite H selected in accordance with the work status by the selector 41b is excluded from the environmental map information M.

When the updater 20c performs the first process (S6), the controller 20 starts sensing of a surrounding area of the working machine 1 by the sensor 25 (S7, first step). When the sensor 25 starts sensing, the controller 20 (the position estimator 20a) starts position estimation based on a sensing result from the sensor 25 and the environmental map information M on which the first process has been performed (S8, second step). Since the worksite H selected in accordance with the work status by the selector 41b is excluded from the environmental map information M in the first process, it can be said that the position estimator 20a modifies the area in the environmental map information M that is referenced by the position estimator 20a based on the work status in each of the worksites H in the second step.

The controller 20 determines whether or not work has been finished in the worksite H (S9). For example, the controller 20 determines whether or not the working machine 1 is located at a predetermined end position in the worksite H based on the estimated position EP estimated by the position estimator 20a, and determines that the work in the worksite H has been finished in the case where the working machine 1 is located at the end position. Note that a method by which the controller 20 determines whether or not work in the worksite H has been finished is not limited to the above example, and for example, the controller 20 may determine whether or not work in the worksite H has been finished by determining whether or not work scheduled in the worksite H has been completed based on a work record of work performed by the working device 2.

In a case where the work has not been finished (S9: No), the controller 20 returns to step S8, whereas in the case where the work has been finished (S9: Yes), the controller 20 ends the series of processes. In a case where the updater 20c determines in step S2 that there is no new selection information (S2: No) or determines in step S5 that the reference date and time are earlier than the defined date and time (S5: No), the updater 20c does not perform the first process, and the controller 20 proceeds to step S7.

In a case where the controller 20 determines that the current mode is the second mode (S1: No), the controller 20 starts sensing of a surrounding area of the working machine 1 by the sensor 25 (S10). The updater 20c determines whether or not the sensor 25 has performed sensing in the deletion portion (area) Eb based on the detected position DP detected by the position detector 26 and a sensing result at the detected position DP (S11).

In a case where the updater 20c determines that the sensor 25 has performed sensing in the deletion portion Eb (S11: Yes), the updater 20c reregisters information or data for the deletion portion Eb based on the detected position DP and the sensing result at the detected position DP as the second process (S12). Specifically, the updater 20c registers, in the deletion portion Eb, point cloud data (detected point cloud data) of the sensing result at each detected position DP. Note that after the sensor 25 has performed sensing in the deletion portion Eb (S11: Yes), position estimation may be performed by using a SLAM algorithm in the case where accuracy of the detected position DP is relatively low, and then in the case where the accuracy of the detected position DP improves, the detected position DP may be prioritized to perform the second process (S12).

The controller 20 determines whether or not work has been finished in the worksite H (S13). The controller 20 returns to step S10 in the case where the work has not been finished (S13: No), whereas the controller 20 ends the series of processes in the case where the work has been finished (S13: Yes). Note that in the case where the updater 20c determines in step S11 that the sensor 25 has not performed sensing in the deletion portion Eb (S11: No), the controller 20 proceeds to step S13.

Note that the flow of the series of processes including the position estimation and the updating process illustrated in FIG. 14 is merely an example and is not limited to this. For example, although the updater 20c inquires of the server 40 whether or not there is new selection information in step S2 in the example illustrated in FIG. 14, the selector 41b may transmit the selection information to the updater 20c via the second communicator 43 and the first communicator 22 when the selector 41b selects a new worksite H.

Example embodiments of the present invention provide assist systems S for working machines 1 and methods of assisting working machines 1 described in the following items.

(Item 1) An assist system S for a working machine 1, including one or more sensors 25 provided in or on the working machine 1 to sense a surrounding area of the working machine 1, a position estimator 20a configured or programmed to estimate a position of the working machine 1 based on a sensing result from the one or more sensors 25 and based on environmental map information M, wherein the environmental map information M includes one or more pieces of map information relating to one or more worksites H, and the position estimator 20a is configured or programmed to modify, based on a work status in each of the one or more worksites H, an area in the environmental map information M to be referenced by the position estimator 20a and estimate the position by referencing the modified area.

With the assist system S for a working machine 1 according to item 1, the area to be referenced can be modified based on the work status in each of the one or more worksites H. Therefore, the position estimator 20a can maintain the accuracy of position estimation even when, for example, the shape of the worksite(s) H has been changed, by not referencing the changed region(s).

(Item 2) The assist system S according to item 1, further including a selector 41b configured or programmed to select at least one worksite H in which the work status satisfies a predetermined condition from the one or more worksites H of the environmental map information M, and the position estimator 20a is configured or programmed to exclude the corresponding at least one piece of map information relating to the at least one worksite H selected by the selector 41b from the environmental map information M to modify the area in the environmental map information M to be referenced by the position estimator 20a.

With the assist system S for a working machine 1 according to item 2, the position estimator 20a excludes piece(s) of map information relating to worksite(s) H in which the work status satisfies a predetermined condition, and it is therefore possible to eliminate or reduce the likelihood that position estimation will be performed by erroneously referencing those piece(s) of map information.

(Item 3) The assist system S according to item 2, further including an updater 20c configured or programmed to update the corresponding at least one piece of map information relating to the at least one worksite H selected by the selector 41b based on the sensing result, wherein the position estimator 20a is configured or programmed to estimate the position based on the environmental map information M which includes the corresponding at least one piece of map information updated by the updater 20c.

With the assist system S for a working machine 1 according to item 3, the accuracy of position estimation of the position estimator 20a can be maintained.

(Item 4) The assist system S according to item 3, wherein the updater 20c is configured or programmed to perform a first process to delete the corresponding at least one piece of map information relating to the at least one worksite H selected by the selector 41b, and a second process to reregister, based on the sensing result, information for a portion of the environmental map information M from which the corresponding at least one piece of map information has been deleted.

With the assist system S for a working machine 1 according to item 4, the position estimator 20a deletes piece(s) of map information relating to worksite(s) H in which the work status satisfies the predetermined condition, and it is therefore possible to reliably eliminate or reduce the likelihood that the position estimator 20a will erroneously reference those piece(s) of map information. It is also possible, because the updater 20c reregisters information for a portion from which the piece(s) of map information has/have been deleted, to reduce the processing load on the whole system.

(Item 5) The assist system S according to any one of items 2 to 4, wherein the one or more worksites H are one or more agricultural fields Ha for crops, and the selector 41b is configured or programmed to select at least one agricultural field Ha from the one or more agricultural fields Ha based on the work status which includes a work record and/or a work plan relating to each of the one or more agricultural fields Ha.

With the assist system S for a working machine 1 according to item 5, it is possible to maintain the accuracy of position estimation in agricultural field(s) Ha that may be changed in shape relatively greatly due to work on the agricultural field(s) Ha or crops, the growth of crops, and/or the like.

(Item 6) The assist system S according to item 5, wherein the selector 41b is configured or programmed to, based on the work record and/or the work plan, select at least one agricultural field Ha in which the degree of growth of a planted crop is equal or greater than a predetermined degree or at least one agricultural field Ha which has possibly changed in shape due to work.

With the assist system S for a working machine 1 according to item 6, the selector 41b can appropriately determine whether or not the piece of map information relating to each of the one or more agricultural fields Ha is suitable for use based on the work record and/or the work plan. It is therefore possible to maintain the accuracy of estimation of the position of the working machine 1 performed by the position estimator 20a.

(Item 7) The assist system S according to any one of items 2 to 6, further including a notifier 120 configured or programmed to provide a warning notification when the selector 41b selects at least one worksite H and the position estimator 20a is to estimate the position without referencing information about the selected at least one worksite H.

With the assist system S for a working machine 1 according to item 7, a user can easily know that the portion of the environmental map information M that relates to one or more of the worksites H is not referenced, i.e., easily know that the position estimation is not performed in the one or more of the worksites H.

(Item 8) The assist system S according to any one of items 2 to 7, further including an assist device 100 to perform a work assistance to assist the working machine 1 in performing work based on the position of the working machine 1 estimated by the position estimator 20a, wherein the assist device 100 is configured or programmed to, at or in the vicinity of the at least one worksite H selected by the selector 41b, prioritize another type of work assistance over the work assistance based on the position of the working machine 1 estimated by the position estimator 20a.

With the assist system S for a working machine 1 according to item 8, another type of work assistance can be prioritized while preventing or reducing a work assistance based on the position that may have been estimated with relatively low accuracy.

(Item 9) The assist system S according to item 8, further including a position detector 26 to detect the position of the working machine 1 based on one or more satellite signals from one or more positioning satellites, wherein the assist device 100 is configured to, at or in the vicinity of the at least one worksite H selected by the selector 41b, use the position of the working machine 1 detected by the position detector 26 in priority to the position of the working machine 1 estimated by the position estimator 20a to perform the work assistance.

With the assist system S for a working machine 1 according to item 9, in the case where the working machine 1 is traveling outside the vicinity of the selected worksite H, it is possible to perform an assistance based on the highly accurate position information estimated by the position estimator 20a, and even in the case where the working machine 1 is at or in the vicinity of the worksite H, the assist device 100 can continue the assistance based on the position detected by the position detector 26.

(Item 10) The assist system S according to item 8, wherein the assist device 100 includes a controller 20 configured or programmed to perform the work assistance including controlling, based on the position of the working machine 1 estimated by the position estimator 20a, at least one of travel of the working machine 1 or work done by the working machine 1.

With the assist system S for a working machine 1 according to item 10, highly accurate control of the working machine 1 can be achieved.

(Item 11) The assist system S according to item 10, wherein the controller 20 is configured or programmed to include a first mode in which the controller 20 controls at least one of travel of the working machine 1 or work done by the working machine 1 based on the position of the working machine 1 estimated by the position estimator 20a, and a second mode in which the controller 20 controls at least one of travel of the working machine 1 or work done by the working machine 1 based on a user's manual operation, and the controller 20 is configured or programmed to, at or in the vicinity of the at least one worksite H selected by the selector 41b, automatically switch the first mode to the second mode to control at least one of travel of the working machine 1 or work done by the working machine 1.

With the assist system S for a working machine 1 according to item 11, in the case where the working machine 1 is traveling outside the vicinity of the selected worksite H, it is possible to perform an assistance based on the accurate position information estimated by the position estimator 20a, and even in the case where the working machine 1 is at or in the vicinity of the selected worksite H, work can be continued by the user's manual operation.

(Item 12) The assist system S according to item 8, wherein the assist device 100 includes a display 23 to perform the work assistance including displaying the position of the working machine 1 estimated by the position estimator 20a.

With the assist system S for a working machine 1 according to item 12, a user can more accurately recognize the position of the working machine 1.

(Item 13) The assist system S according to any one of items 1 to 12, wherein the one or more sensors 25 include one or more ranging sensors to measure a distance to at least a portion of surroundings of the working machine 1, and the position estimator 20a is configured or programmed to estimate the position based on one or more ranging signals from the one or more ranging sensors, based on the environmental map information M, and based on a simultaneous localization and mapping (SLAM) algorithm.

With the assist system S for a working machine 1 according to item 13, it is possible to achieve highly accurate estimation of the position of the working machine 1 using SLAM.

(Item 14) A method of assisting a working machine 1, the method including a first step including causing one or more sensors 25 in or on the working machine 1 to sense a surrounding area of the working machine 1, and a second step including causing a position estimator 20a to estimate a position of the working machine 1 based on a sensing result from the one or more sensors 25 in the first step and based on environmental map information M, wherein the environmental map information M includes one or more pieces of map information relating to one or more worksites H, and the second step includes causing the position estimator 20a to modify, based on a work status in each of the one or more worksites H, an area in the environmental map information M to be referenced by the position estimator 20a and estimate the position by referencing the modified area.

With the method of assisting the working machine 1 according to item 14, the area that is referenced can be modified based on the work status in each of the one or more worksites H. Therefore, the position estimator 20a can maintain the accuracy of position estimation even when, for example, the shape of the worksite(s) H has been changed, by not referencing the changed region(s).

While example embodiments of the present invention have been described above, it is to be understood that variations and modifications will be apparent to those skilled in the art without departing from the scope and spirit of the present invention. The scope of the present invention, therefore, is to be determined solely by the following claims.

## Claims

1. An assist system (S) for a working machine (1), comprising:
one or more sensors (25) provided in or on the working machine (1) to sense a surrounding area of the working machine (1); and
a position estimator (20a) configured or programmed to estimate a position of the working machine (1) based on a sensing result from the one or more sensors (25) and based on environmental map information (M); wherein
the environmental map information (M) includes one or more pieces of map information relating to one or more worksites (H); and
the position estimator (20a) is configured or programmed to modify, based on a work status in each of the one or more worksites (H), an area in the environmental map information (M) to be referenced by the position estimator (20a) and estimate the position by referencing the modified area.

2. The assist system (S) according to claim 1, further comprising:
a selector (41b) configured or programmed to select at least one worksite (H) in which the work status satisfies a predetermined condition from the one or more worksites (H) of the environmental map information (M); and
the position estimator (20a) is configured or programmed to exclude the corresponding at least one piece of map information relating to the at least one worksite (H) selected by the selector (41b) from the environmental map information (M) to modify the area in the environmental map information (M) to be referenced by the position estimator (20a).

3. The assist system (S) according to claim 2, further comprising:
an updater (20c) configured or programmed to update the corresponding at least one piece of map information relating to the at least one worksite (H) selected by the selector (41b) based on the sensing result; wherein
the position estimator (20a) is configured or programmed to estimate the position based on the environmental map information (M) which includes the corresponding at least one piece of map information updated by the updater (20c).

4. The assist system (S) according to claim 3, wherein the updater (20c) is configured or programmed to perform:
a first process to delete the corresponding at least one piece of map information relating to the at least one worksite (H) selected by the selector (41b); and
a second process to reregister, based on the sensing result, information for a portion of the environmental map information (M) from which the corresponding at least one piece of map information has been deleted.

5. The assist system (S) according to any one of claims 2 to 4, wherein
the one or more worksites (H) are one or more agricultural fields (Ha) for crops; and
the selector (41b) is configured or programmed to select at least one agricultural field (Ha) from the one or more agricultural fields (Ha) based on the work status which includes a work record and/or a work plan relating to each of the one or more agricultural fields (Ha).

6. The assist system (S) according to claim 5, wherein the selector (41b) is configured or programmed to, based on the work record and/or the work plan, select at least one agricultural field (Ha) in which the degree of growth of a planted crop is equal or greater than a predetermined degree or at least one agricultural field (Ha) which has possibly changed in shape due to work.

7. The assist system (S) according to any one of claims 2 to 6, further comprising:
a notifier (120) configured or programmed to provide a warning notification when the selector (41b) selects at least one worksite (H) and the position estimator (20a) is to estimate the position without referencing information about the selected at least one worksite (H).

8. The assist system (S) according to any one of claims 2 to 7, further comprising an assist device (100) to perform a work assistance to assist the working machine (1) in performing work based on the position of the working machine (1) estimated by the position estimator (20a); wherein
the assist device (100) is configured or programmed to, at or in the vicinity of the at least one worksite (H) selected by the selector (41b), prioritize another type of work assistance over the work assistance based on the position of the working machine (1) estimated by the position estimator (20a).

9. The assist system (S) according to claim 8, further comprising:
a position detector (26) to detect the position of the working machine (1) based on one or more satellite signals from one or more positioning satellites; wherein
the assist device (100) is configured to, at or in the vicinity of the at least one worksite (H) selected by the selector (41b), use the position of the working machine (1) detected by the position detector (26) in priority to the position of the working machine (1) estimated by the position estimator (20a) to perform the work assistance.

10. The assist system (S) according to claim 8, wherein the assist device (100) includes a controller (20) configured or programmed to perform the work assistance including controlling, based on the position of the working machine (1) estimated by the position estimator (20a), at least one of travel of the working machine (1) or work done by the working machine (1).

11. The assist system (S) according to claim 10, wherein
the controller (20) is configured or programmed to include:
a first mode in which the controller (20) controls at least one of travel of the working machine (1) or work done by the working machine (1) based on the position of the working machine (1) estimated by the position estimator (20a); and
a second mode in which the controller (20) controls at least one of travel of the working machine (1) or work done by the working machine (1) based on a user's manual operation; and
the controller (20) is configured or programmed to, at or in the vicinity of the at least one worksite (H) selected by the selector (41b), automatically switch the first mode to the second mode to control at least one of travel of the working machine (1) or work done by the working machine (1).

12. The assist system (S) according to claim 8, wherein the assist device (100) includes a display (23) to perform the work assistance including displaying the position of the working machine (1) estimated by the position estimator (20a).

13. The assist system (S) according to any one of claims 1 to 12, wherein
the one or more sensors (25) include one or more ranging sensors to measure a distance to at least a portion of surroundings of the working machine (1); and
the position estimator (20a) is configured or programmed to estimate the position based on one or more ranging signals from the one or more ranging sensors, based on the environmental map information (M), and based on a simultaneous localization and mapping (SLAM) algorithm.

14. A method of assisting a working machine (1), the method comprising:
a first step including causing one or more sensors (25) in or on the working machine (1) to sense a surrounding area of the working machine (1); and
a second step including causing a position estimator (20a) to estimate a position of the working machine (1) based on a sensing result from the one or more sensors (25) in the first step and based on environmental map information (M); wherein
the environmental map information (M) includes one or more pieces of map information relating to one or more worksites (H); and
the second step includes causing the position estimator (20a) to modify, based on a work status in each of the one or more worksites (H), an area in the environmental map information (M) to be referenced by the position estimator (20a) and estimate the position by referencing the modified area.
